# EUROPEAN PATENT SPECIFICATION

(11) **EP 3 526 278 B1**
(45) Date of publication and mention of the grant of the patent: **30.12.2020**
(21) Application number: 17804649.6
(22) Date of filing: 09.10.2017
(51) Int. Cl.: C08G 77/20, C08G 77/28, C08G 77/392

(54) **CHAIN-EXTENDED POLYDIMETHYLSILOXANE VINYLIC CROSSLINKERS AND USES THEREOF**
KETTENVERLÄNGERTE POLYDIMETHYLSILOXAN VINYLISCHE VERNETZER UND IHRE VERWENDUNGEN
RÉTICULANTS VINYLIQUES POLYDIMÉTHYLSILOXANE À CHAÎNE ÉTENDUE ET LEURS UTILISATIONS

(30) Priority: 11.10.2016 US 201662406465 P
(43) Date of publication of application: 21.08.2019
(73) Proprietor: Alcon Inc., 1701 Fribourg (CH)
(72) Inventor: JING, Feng, Johns Creek, Georgia 30097 (US); CHANG, Frank, Johns Creek, Georgia 30097 (US)
(74) Representative: Bohest AG
(86) International application number: PCT/IB2017/056223
(87) International publication number: WO 2018/069815

(56) References cited:
- US-A1- 2012 088 843
- US-A1- 2015 092 155

## Description

The present invention is related to a class of chain-extended polydiorganosiloxane vinylic crosslinkers, lens formulations which comprise such a chain-extended polydiorganosiloxane vinylic crosslinker and are suitable for making silicone hydrogel contact lenses with long thermal stability. In additon, the present invention is related to silicone hydrogel contact lenses made from such a lens formulation.

### BACKGROUND

In recent years, soft silicone hydrogel contact lenses become more and more popular because of their high oxygen permeability and comfort. "Soft" contact lenses can conform closely to the shape of the eye, so oxygen cannot easily circumvent the lens. Soft contact lenses must allow oxygen from the surrounding air (i.e., oxygen) to reach the cornea because the cornea does not receive oxygen from the blood supply like other tissue. If sufficient oxygen does not reach the cornea, corneal swelling occurs. Extended periods of oxygen deprivation cause the undesirable growth of blood vessels in the cornea. By having high oxygen permeability, a silicone hydrogel contact lens allows sufficient oxygen to permeate through the lens to the cornea and to have minimal adverse effects on corneal health.

One of lens forming materials widely used in making silicone hydrogel contact lenses is a polydiorganosiloxane (e.g., polydimethylsiloxane) vinylic crosslinker which can provide high oxygen permeability to resultant contact lenses. But, a polydimethylsiloxane vinylic crosslinker can affect the mechanical properties, e.g., elastic modulus, of the resultant contact lenses. For example, a low molecular weight polydimethylsiloxane vinylic crosslinker (Mn<1,000 g/mol) may provide a resultant contact lens with a relatively high elastic modulus in order to achieve a desired oxygen permeability. A relative high molecular weight polydimethylsiloxane vinylic crosslinker is typically used in achieve both the high oxygen permeability and the low elastic modulus. However, because of its hydrophobic nature, a polydimethylsiloxane vinylic crosslinker, especially one with high molecular weight, is not compatible with hydrophilic components in a lens formulation, including, e.g., N,N-dimethylacrylamide (DMA), N-vinylpyrrolidone (NVP), N-vinyl-N-methylacetamide (VMA), or an internal wetting agent. It would be difficult to obtain homogeneous lens formulations (i.e., clear lens formulations) from use of such a polydimethylsiloxane vinylic crosslinker.

It would be even more difficult to obtain a homogeneous, solventless lens formulation from use of such a polydimethylsiloxane vinylic crosslinker. Use of organic solvents in preparing silicone hydrogel contact lens can be costly and is not environmentally friendly.

Therefore, there is a need for new hydophilized polydiorganosiloxane vinylic crosslinkers suitable for preparing a solventless lens formulation that can be used to produce silicone hydrogel contact lenses with long thermal stability.

Documents, including U.S. Pat. Nos. 4260725, 5034461, 5346946, 5416132, 5449729, 5486579, 5512205, 5760100, 5994488, 6858218, 6867245, 7671156, 7744785, 8129442, 8163206, 8501833, 8513325, 8524850, 8835525, 8993651, and 9187601 and U.S. Pat. App. Pub. No. 2016/0090432 A1, disclose that various lens formulations (which are either solvent-containing or solventless formulations) comprising one or more hydrophilized polysiloxane crosslinkers can be used for making silicone hydrogel contact lenses. US2015/092155A1 discloses similar vinylic crosslinkers, but with different linking groups.

### SUMMARY OF THE INVENTION

The present invention, in one aspect, provides a chain-extended polydiorganosiloxane vinylic crosslinker. The chain-extended polydiorganosiloxane vinylic crosslinker of the invention comprises: (1) a polymer chain comprising at least two polydiorganosiloxane segments and one hydrophilized linker between each pair of polydiorganosiloxane segements, wherein each polydiorganosiloxane comprises at least 5 dimethylsiloxane units in a consecutive sequence, wherein the hydrophilized linker is a divalent radical having at least two amide moieties; (2) two terminal (meth)acryloyl groups, wherein the chain-extended polydiorganosiloxane vinylic crosslinker has a number-average molecular weight of greater than 1500 Daltons.

In another aspect, the invention provides a silicone hydrogel contact lens comprising a crosslinked polymeric material comprising: units of a chain-extended polydiorganosiloxane vinylic crosslinker of the invention (described above), units of a siloxane-containing vinylic monomer, units of at least one hydrophilic vinylic monomer, wherein the silicone hydrogel contact lens, when being fully hydrated, has an oxygen permeability (Dk) of at least about 70 barrers, a water content of from about 25% to about 70% by weight, an elastic modulus of from about 0.2 MPa to about 1.2 MPa.

In a further aspect, the present invention provides a method for producing silicone hydrogel contact lenses. The method comprises the steps of: preparing a lens-forming composition which is clear at room temperature and optionally but preferably at a temperature of from about 0 to about 4°C, wherein the lens-forming composition comprises (a) from about 5% to about 35% by weight of a chain-extended polydiorganosiloxane vinylic crosslinker of the invention, (b) a siloxane-containing vinylic monomer, (c) from about 30% to about 60% by weight of at least one hydrophilic vinylic monomer, (d) at least one free-radical initiator, provided that the above-listed polymerizable components and any additional polymerizable components add up to 100% by weight; introducing the lens-forming compositon into a mold, wherein the mold has a first mold half with a first molding surface defining the anterior surface of a contact lens and a second mold half with a second molding surface defining the posterior surface of the contact lens, wherein said first and second mold halves are configured to receive each other such that a cavity is formed between said first and second molding surfaces; curing thermally or actinically the lens-forming composition in the lens mold to form a silicone hydrogel contact lens, wherein the silicone hydrogel contact lens has an oxygen permeability (Dk) of at least about 70 barrers, a water content of from about 25% to about 70% by weight, and an elastic modulus of from about 0.2 MPa to about 1.2 MPa.

### DETAILED DESCRIPTION OF EMBODIMENTS OF THE INVENTION

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art.

"About" as used herein in this application means that a number, which is referred to as "about", comprises the recited number plus or minus 1-10% of that recited number.

An "ophthalmic device", as used herein, refers to a contact lens (hard or soft), an intraocular lens, a corneal onlay, other ophthalmic devices (e.g., stents, glaucoma shunt) used on or about the eye or ocular vicinity.

"Contact Lens" refers to a structure that can be placed on or within a wearer's eye. A contact lens can correct, improve, or alter a user's eyesight, but that need not be the case. A contact lens can be of any appropriate material known in the art or later developed, and can be a soft lens, a hard lens, or a hybrid lens. A "silicone hydrogel contact lens" refers to a contact lens comprising a silicone hydrogel material.

A "hydrogel" or "hydrogel material" refers to a crosslinked polymeric material which is insoluble in water, but can absorb at least 10 percent by weight of water when it is fully hydrated.

A "silicone hydrogel" refers to a silicone-containing hydrogel obtained by copolymerization of a polymerizable composition comprising at least one silicone-containing vinylic monomer or at least one silicone-containing vinylic macromer or at least one actinically-crosslinkable silicone-containing prepolymer.

"Hydrophilic," as used herein, describes a material or portion thereof that will more readily associate with water than with lipids.

A "vinylic monomer" refers to a compound that has one sole ethylenically unsaturated group and is soluble in a solvent.

The term "soluble", in reference to a compound or material in a solvent, means that the compound or material can be dissolved in the solvent to give a solution with a concentration of at least about 0.5% by weight at room temperature (i.e., a temperature of about 20°C to about 30°C).

The term "insoluble", in reference to a compound or material in a solvent, means that the compound or material can be dissolved in the solvent to give a solution with a concentration of less than 0.005% by weight at room temperature (as defined above).

The term "olefinically unsaturated group" or "ethylenically unsaturated group" is employed herein in a broad sense and is intended to encompass any groups containing at least one >C=C< group. Exemplary ethylenically unsaturated groups include without limitation (meth)acryloyl ( 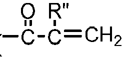 in which R" is hydrogen or methyl), allyl, vinyl, styrenyl, or other C=C containing groups.

The term "ene group" refers to a monovalent radical comprising CH₂=CH- that is not covalently attached to an oxygen or nitrogen atom or a carbonyl group.

As used herein, "actinically" in reference to curing, crosslinking or polymerizing of a polymerizable composition, a prepolymer or a material means that the curing (e.g., crosslinked and/or polymerized) is performed by actinic irradiation, such as, for example, UV irradiation, ionizing radiation (e.g. gamma ray or X-ray irradiation), microwave irradiation. Thermal curing or actinic curing methods are well-known to a person skilled in the art.

The term "(meth)acrylamide" refers to methacrylamide and/or acrylamide.

The term "(meth)acrylate" refers to methacrylate and/or acrylate.

The term "(meth)acrylamido" refers to a group of 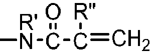 in which R' is hydrogen or C₁-C₄-alkyl and R" is hydrogen or methyl.

The term "(meth)acryloxy" refers to a group of 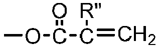 in which R" is hydrogen or methyl.

A "hydrophilic vinylic monomer", as used herein, refers to a vinylic monomer which as a homopolymer typically yields a polymer that is water-soluble or can absorb at least 10 percent by weight water.

A "hydrophobic vinylic monomer", as used herein, refers to a vinylic monomer which as a homopolymer typically yields a polymer that is insoluble in water and can absorb less than 10 percent by weight water.

A "blending vinylic monomer" refers to a vinylic monomer capable of dissolving both hydrophilic and hydrophobic components of a polymerizable composition to form a solution.

A "macromer" or "prepolymer" refers to a compound or polymer that contains ethylenically unsaturated groups and has a Mn of greater than 700 Daltons.

A "polymer" means a material formed by polymerizing/crosslinking one or more vinylic monomers, macromers and/or prepolymers.

"Molecular weight" of a polymeric material (including monomeric or macromeric materials), as used herein, refers to the number-average molecular weight (Mn) unless otherwise specifically noted or unless testing conditions indicate otherwise.

The term "alkyl" refers to a monovalent radical obtained by removing a hydrogen atom from a linear or branched alkane compound. An alkyl group (radical) forms one bond with one other group in an organic compound.

The term "alkylene" refers to a divalent radical obtained by removing one hydrogen atom from an alkyl. An alkylene group (or radical) forms two bonds with other groups in an organic compound.

In this application, the term "substituted" in reference to an alkylene divalent radical or an alkyl radical means that the alkylene divalent radical or the alkyl radical comprises at least one substituent which replaces one hydrogen atom of the alkylene or alkyl radical and is selected from the group consisting of hydroxyl, carboxyl, -NH₂, sulfhydryl, C₁-C₄ alkyl, C₁-C₄ alkoxy, C₁-C₄ alkylthio (alkyl sulfide), C₁-C₄ acylamino, C₁-C₄ alkylamino, di-C₁-C₄ alkylamino, halogen atom (Br or CI), and combinations thereof.

As used herein, the term "multiple" refers to three or more.

A "vinylic crosslinker" refers to a compound having at least two ethylenically-unsaturated groups. A "vinylic crossliking agent" refers to a compound with two or more ethylenically unsaturated groups and with a Mn of less than 700 Daltons.

A free radical initiator can be either a photoinitiator or a thermal initiator. A "photoinitiator" refers to a chemical that initiates free radical crosslinking/polymerizing reaction by the use of light. A "thermal initiator" refers to a chemical that initiates radical crosslinking/polymerizing reaction by the use of heat energy.

A "polymerizable UV-absorbing agent" or "UV-absorbing vinylic monomer" refers to a compound comprising an ethylenically-unsaturated group and a UV-absorbing moiety.

A "UV-absorbing moiety" refers to an organic functional group which can absorb UV radiation in the range from 200 nm to 400 nm as understood by a person skilled in the art.

A "spatial limitation of actinic radiation" refers to an act or process in which energy radiation in the form of rays is directed by, for example, a mask or screen or combinations thereof, to impinge, in a spatially restricted manner, onto an area having a well defined peripheral boundary. A spatial limitation of UV/visible radiation is obtained by using a mask or screen having a radiation (e.g.,UV/visible) permeable region, a radiation (e.g., UV/visible) impermeable region surrounding the radiation-permeable region, and a projection contour which is the boundary between the radiation-impermeable and radiation-permeable regions, as schematically illustrated in the drawings of U.S. Patent Nos. 6,800,225 (Figs. 1-11), and 6,627,124 (Figs. 1-9), 7,384,590 (Figs. 1-6), and 7,387,759 (Figs. 1-6). The mask or screen allows to spatially projects a beam of radiation (e.g., UV/visible radiation) having a cross-sectional profile defined by the projection contour of the mask or screen. The projected beam of radiation (e.g., UV/visible radiation) limits radiation (e.g., UV/visible radiation) impinging on a lens-forming material located in the path of the projected beam from the first molding surface to the second molding surface of a mold. The resultant contact lens comprises an anterior surface defined by the first molding surface, an opposite posterior surface defined by the second molding surface, and a lens edge defined by the sectional profile of the projected UV/visible beam (i.e., a spatial limitation of radiation). The radiation used for the crosslinking is a radiation energy, especially UV/visible radiation, gamma radiation, electron radiation or thermal radiation, the radiation energy preferably being in the form of a substantially parallel beam in order on the one hand to achieve good restriction and on the other hand efficient use of the energy.

In the conventional cast-molding process, the first and second molding surfaces of a mold are pressed against each other to form a circumferential contact line which defines the edge of a result contact lens. Because the close contact of the molding surfaces can damage the optical quality of the molding surfaces, the mold cannot be reused. In contrast, in the Lightstream Technology™, the edge of a resultant contact lens is not defined by the contact of the molding surfaces of a mold, but instead by a spatial limitation of radiation. Without any contact between the molding surfaces of a mold, the mold can be used repeatedly to produce high quality contact lenses with high reproducibility.

"Surface modification" or "surface treatment", as used herein, means that an article has been treated in a surface treatment process (or a surface modification process) prior to or posterior to the formation of the article, in which (1) a coating is applied to the surface of the article, (2) chemical species are adsorbed onto the surface of the article, (3) the chemical nature (e.g., electrostatic charge) of chemical groups on the surface of the article are altered, or (4) the surface properties of the article are otherwise modified. Exemplary surface treatment processes include, but are not limited to, a surface treatment by energy (e.g., a plasma, a static electrical charge, irradiation, or other energy source), chemical treatments, the grafting of hydrophilic vinylic monomers or macromers onto the surface of an article, mold-transfer coating process disclosed in U.S. Patent No. 6,719,929 the incorporation of wetting agents into a lens formulation for making contact lenses proposed in U.S. Patent Nos. 6,367,929 and 6,822,016 reinforced mold-transfer coating disclosed in U.S. Patent No. 7,858,000 and a hydrophilic coating composed of covalent attachment or physical deposition of one or more layers of one or more hydrophilic polymer onto the surface of a contact lens disclosed in US Patent Nos. 8,147,897 and 8,409,599 and US Patent Application Publication Nos. 2011/0134387, 2012/0026457 and 2013/0118127.

"Post-curing surface treatment", in reference to a silicone hydrogel material or a soft contact lens, means a surface treatment process that is performed after the formation (curing) of the hydrogel material or the soft contact lens in a mold.

A "hydrophilic surface" in reference to a silicone hydrogel material or a contact lens means that the silicone hydrogel material or the contact lens has a surface hydrophilicity characterized by having an averaged water contact angle of about 90 degrees or less, preferably about 80 degrees or less, more preferably about 70 degrees or less, more preferably about 60 degrees or less.

An "average contact angle" refers to a water contact angle (advancing angle measured by Sessile Drop), which is obtained by averaging measurements of at least 3 individual contact lenses.

The intrinsic "oxygen permeability", Dk, of a material is the rate at which oxygen will pass through a material. As used in this application, the term "oxygen permeability (Dk)" in reference to a hydrogel (silicone or non-silicone) or a contact lens means a measured oxygen permeability (Dk) which is corrected for the surface resistance to oxygen flux caused by the boundary layer effect according to the procedures shown in Examples hereinafter. Oxygen permeability is conventionally expressed in units of barrers, where "barrer" is defined as [(cm³ oxygen)(mm) / (cm²)(sec)(mm Hg)] x 10⁻¹⁰.

The "oxygen transmissibility", Dk/t, of a lens or material is the rate at which oxygen will pass through a specific lens or material with an average thickness of t [in units of mm] over the area being measured. Oxygen transmissibility is conventionally expressed in units of barrers/mm, where "barrers/mm" is defined as [(cm³ oxygen) / (cm²)(sec)(mm Hg)] x 10⁻⁹

A "chain-extended polydiorganosiloxane vinylic crosslinker" refers to a compound which comprises at least two ethylenically unsaturated groups and at least two polydiorganosiloxane segments separated by a linkage.

The term "thermal stability" in reference to a silicone hydrogel contact lens means that the silicone hydrogel contact lens can be subjected up to 19 cycles of autoclaves (each for 30 minutes at 121°C) in a phosphate-buffered saline (7.2±0.2) without significant autoclave-induced change (i.e., an increase or decrease) of about 10% or less, preferably about 5% or less) in at least one lens property selected from the group consisting of: elastic modulus E' (MPa), water content (WC%), lens diameter Dₗₑₙₛ (mm), and combinations thereof, relative to the corresponding lens property of the silicone hydrogel contact lens which is subjected to one sole autoclave for 30 minutes at 121°C) in a phosphate-buffered saline (7.2±0.2). For example, the autoclave-induced change in a lens property (ΔL̅P̅_̅{̅A̅C̅}̅) is calculated based on the following equation $Δ \overline{{LP}_{AC}} = \left|\frac{\overline{{LP}_{nAC}} - \overline{{LP}_{1 AC}}}{\overline{{LP}_{1 AC}}}\right|$ in which L̅P̅_̅{̅1̅A̅C̅}̅ is the averaged value of the after-one-autoclave lens property of the soft contact lens and is obtained by averaging the values of the lens property of 15 soft contact lenses measured after being autoclaved one sole time for 30 minutes at 121°C in a phosphate buffered saline at a pH of 7.2±0.2 and L̅P̅_̅{̅n̅A̅C̅}̅ is the averaged value of the after-n-autoclaves lens property of the soft contact lens and is obtained by averaging the values of the lens property of 15 soft contact lenses measured after being stored and n cycles (times) of autoclaves each for 30 minutes at 121°C in a phosphate buffered saline at a pH of 7.2±0.2. It is believed that the tests of autoclave-induced change in elastic modulus of silicone hydrogel contact lenses can be used in replacing traditional accelerated shelf-life studies at elevated temperature (e.g., 65°C to 95°C), in order to shorten significantly the time required for determining the equivalent shelf-life at room temperature.

As used in this application, the term "clear" in reference to a lens-forming composition means that the lens-forming composition is a transparent solution or liquid mixture (i.e., having a light transmissibility of 85% or greater, preferably 90% or greater in the range between 400 to 700 nm).

In general, the invention is directed to a class of chain-extended polydiorganosiloxane vinylic crosslinkers which each comprise (1) a polymer chain comprising at least two polydiorganosiloxane segments and one hydrophilized linker between each pair of polydiorganosiloxane segements, wherein each polydiorganosiloxane comprises at least 5 dimethylsiloxane units in a consecutive sequence, wherein the hydrophilized linker is a divalent radical having at least two amide moieties (i.e., 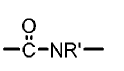 in which R' is hydrogen or C₁-C₄-alkyl); (2) two terminal (meth)acryloyl groups, wherein the chain-extended polydiorganosiloxane vinylic crosslinker has a Mn of at least 1500 Daltons.

There are several potential unique features associated with preparation and use of chain-extended polydiorganosiloxane vinylic crosslinkers of the invention in making silicone hydrogel contact lens.

First, a chain-extended polydiorganosiloxane vinylic crosslinker of the invention is more compatible with other hydrophilic polymerizable components (e.g., hydrophilic vinylic monomer, hydrophilic crosslinking agent, and/or hydrophilic prepolymer), because of the presence of hydrophilized linkages. Because of the hydrogen bonding capability of hydrophilic moieties or groups in the hydrophilized linakges, a chain-extended polydiorganosiloxane vinylic crosslinker of the invention is suitable for preparing various solvent-containing or solventless lens formulations which can contain a large amount of hydrophilic polymerizable component and are still clear at room temperature or even at a low storage temperature of from about 0°C to about 4°C. Such a lens formulation can be advantageously prepared in advance in the production.

Second, because each polydiorganosiloxane segment has at least 5 dimethylsiloxane units in a consecutive sequence, a chain-extended polydiorganosiloxane vinylic crosslinker of the invention may be used to efficiently provide relatively-high oxygen permeability per siloxane unit without adversely affecting its compatibility with other hydrophilic polymerizable components.

Third, a chain-extended polydiorganosiloxane vinylic crosslinker of the invention can be designed to be free of unstable bonds (such as, ester bond with a tertiary carbon atom adjacent to the carbonyl group of the ester bond, urea bond, urethane bond, polyethylene glycol segment) which are susceptible of cleavage due to hydrolysis, photolysis, poor thermal stability, and/or oxidation. By using such a chain-extended polydiorganosiloxane vinylic crosslinker in a silicone hydrogel lens formulation, silicone hydrogel contact lenses obtained from such a lens formulation can have superior lens stability.

Fourth, a chain-extended polydiorganosiloxane vinylic crosslinker of the invention is prepared according to two well-known click reactions: thiol-lactone ring-opening reaction and thiol-Michael Addition reaction. Because no metal catalyst is used in the reactions, there would be no or minimal toxicology concern. Another advantage associated with the preparation is no need for the isolation and purification of intermediate chemicals.

The present invention, in one aspect, provides a chain-extended polydiorganosiloxane vinylic crosslinker. The chain-extended polydiorganosiloxane vinylic crosslinker of the invention comprises:
(1) a polymer chain comprising at least two polydiorganosiloxane segments and one hydrophilized linker (designated *"hp*L") between each pair of polydiorganosiloxane segments, wherein each polydiorganosiloxane comprises at least 5 dimethylsiloxane units in a consecutive sequence, wherein the hydrophilized linker is a divalent radical of formula (I) or (II) 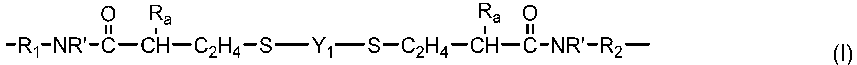 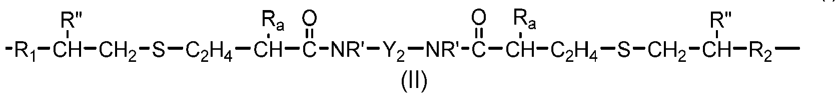 in which
   R' is hydrogen or C₁-C₄ alkyl (preferably hydrogen or methyl or ethyl, more preferably hydrogen or methyl),
   R" is hydrogen or methyl,
   Rₐ is C₂-C₄ alkanoylamino which optionally has a carboxyl group (preferably acetylamino, propionylamino or butyrylamino, more preferably acetylamino or propionylamino, even more preferably acetylamino),
   R₁ and R₂ are each linked directly to one silicon atom of one polydiorganosiloxane segment and independent of each other are a C₁-C₆ alkylene divalent radical or a C₁-C₆ alkylene-oxy-C₁-C₆ alkylene divalent radical,
   Y₁ is a divalent radical of formula (III) or (V) 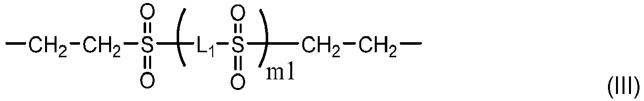 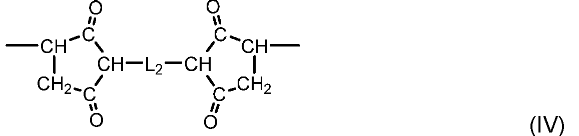 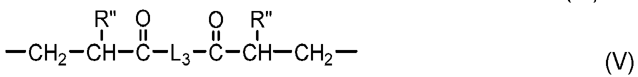 in which
      m1 is 0 or 1,
      R" is hydrogen or methyl,
      L₁ is a C₁-C₆ alkylene divalent radical, a hydroxyl-or methoxy-substituted C₁-C₆ alkylene divalent radical, or a substituted or unsubstituted phenylene divalent radical,
      L₂ is a C₁-C₆ alkylene divalent radical, a hydroxyl-or methoxy-substituted C₁-C₆ alkylene divalent radical, a dihydroxyl- or dimethoxy-substituted C₂-C₆ alkylene divalent radical, a divalent radical of -C₂H₄-(O-C₂H₄)ₘ₂- in which m2 is an integer of 1 to 6, a divalent radical of -L₄-S-S-L₄- in which L₄ is a C₁-C₆ alkylene divalent radical, a hydroxyl- or methoxy-substituted C₁-C₆ alkylene divalent radical, or a substituted or unsubstituted phenylene divalent radical, L₃ is a divalent radical of any one of (a) -NR₃- in which R₃ is hydrogen or C₁-C₃ alkyl, (b) 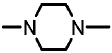 , (c) -NR"-L₅-NR"- in which R" is hydrogen or methyl and L₅ is a C₁-C₆ alkylene divalent radical, 2-hydroxylpropylene divalent radical, 2-(phosphonyloxy)propylene divalent radical, 1,2-dihydroxyethylene divalent radical, 2,3-dihydroxybutylene divalent radical, and (d) -O-L₆-O- in which L₆ is a C₁-C₆ alkylene divalent radical, a divalent radical of 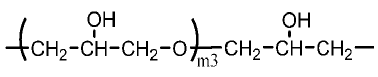 in which m3 is 1 or 2, a divalent radical 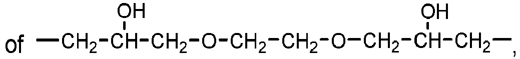 a divalent radical of 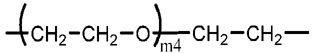 in which m4 is an integer of 1 to 5, a divalent radical of 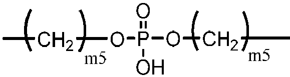 in which m5 is 2 or 3, or a substituted C₃-C₈ alkylene divalent radical having a hydroxyl group or phosphonyloxy group,
   Y₂ is a C₁-C₆ alkylene divalent radical, 2-hydroxylpropylene divalent radical, 2-(phosphonyloxy)propylene divalent radical, 1,2-dihydroxyethylene divalent radical, a divalent radical of 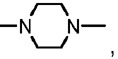 or a divalent radical of 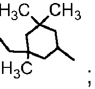
(2) two terminal (meth)acryloyl groups of 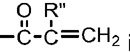 in which R" is hydrogen or methyl,
   wherein the chain-extended polydiorganosiloxane vinylic crosslinker has an average molecular weight of at least about 1500 Daltons.

In accordance with the invention, the chain-extended polydiorganosiloxane vinylic crosslinker is preferably defined by formula (VI), (VII) or (VIII) 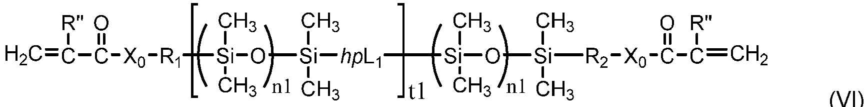 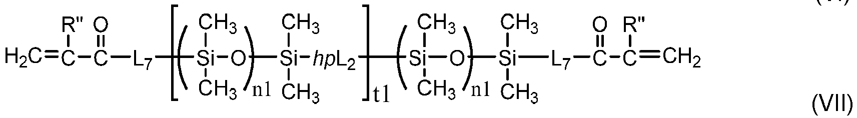 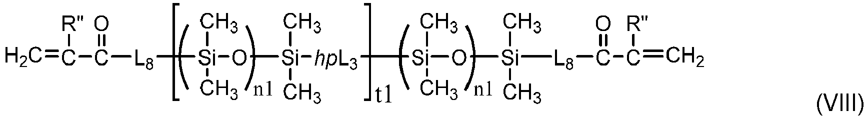 in which:
n1 is an integer of from 5 to 50;
t1 is an integer of from 1 to 15;
X₀ is O or NR' in which R' is hydrogen or C₁-C₄-alkyl;
R" is hydrogen or methyl;
R₁ and R₂ independent of each other are a C₁-C₆ alkylene divalent radical or a C₁-C₆ alkylene-oxy-C₁-C₆ alkylene divalent radical;
*hp*L₁ is a divalent radical of formula (II) in which Y₂ is as defined above;
*hp*L₂ is a divalent radical of formula (I) in which Y₁ is a divalent radical of formula (V) in which L₃ is as defined above;
*hp*L₃ is a divalent radical of formula (I) in which Y₁ is a divalent radical of formula (III) or (IV) in which L₁ and L₂ are as defined above;
L₇ is a divalent radical of formula (IXa) or (IXb) 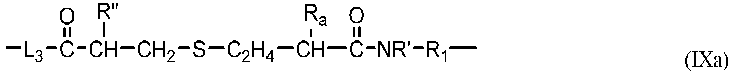 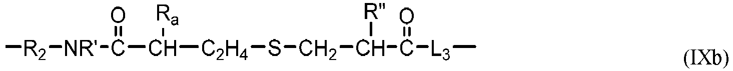
in which R', R", Rₐ, R₁, R₂, and L₃ are as defined above, each of R₁ and R₂ is linked directly to one silicon atom of one polydiorganosiloxane segment while L₃ is linked directly to one (meth)acryloyl group,
L₈ is a divalent radical of formula (Xa) or (Xb) 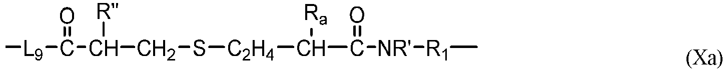 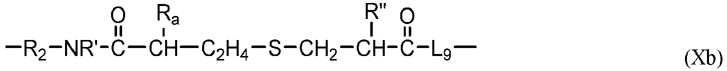 in which R', R", Rₐ, R₁, and R₂, are as defined above, each of R₁ and R₂ is linked directly to one silicon atom of one polydiorganosiloxane segment while L₉ is linked directly to one (meth)acryloyl group, and L₉ is a divalent radical of any one of (a) - NR₃- in which R₃ is hydrogen or C₁-C₃ alkyl, (b) 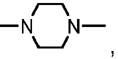 (c) -NR"-L₅-NR"- in which R" is hydrogen or methyl and L₅ is a C₁-C₆ alkylene divalent radical, 2-hydroxylpropylene divalent radical, 2-(phosphonyloxy)propylene divalent radical, 1,2-dihydroxyethylene divalent radical, 2,3-dihydroxybutylene divalent radical, and (d) -O-L₆-O- in which L₆ is a C₁-C₆ alkylene divalent radical, a divalent radical of 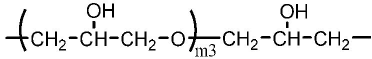 in which m3 is 1 or 2, a divalent radical of 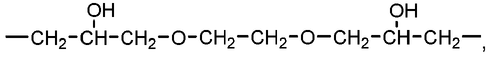 a divalent radical of 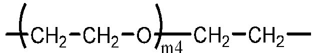 in which m4 is an integer of 1 to 5, a divalent radical of 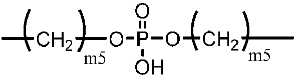 in which m5 is 2 or 3, or a substituted C₃-C₈ alkylene divalent radical having a hydroxyl group or phosphonyloxy group.

In accordance with a preferred embodiment, a chain-extended polydiorganosiloxane vinylic crosslinker of the invention has a number-average molecular weight of preferably at least about 3000 Daltons, more preferably from about 4000 Daltons to about 100,000 Daltons, even more preferably from about 5000 Daltons to about 50,000 Dalton, most preferably from about 7000 Daltons to about 25,000 Daltons.

A chain-extended polydiorganosiloxane vinylic crosslinker having one or more linkages of formula (I) in which Y₁ is a divalent radical of formula (III) or (IV) (e.g., a chain-extended polydiorganosiloxane vinylic crosslinker of formula (VIII)) can be prepared in a 3-step reaction scheme (for example, as illustrated in Example 1). In the first step, a diamino-terminated polydiorganosiloxane can be reacted with N-acetylhomocysteine thiolactone (or any one of commercially-available N-acylhomocystein thiolactone) to obtain a dithiol-terminated polydiorganosiloxane. In the second step, the dithiol-terminated polydiorganosiloxane can be reacted with a divinylsulfone compound (i.e., a sulfone compound having two vinylsulfonyl groups) or with a dimaleimide according to Thiol Michael Addition reaction, to obtain a dithiol-terminated chain-extended polydiorganosiloxane having said one or more linkages. It is understood that the molar equivalent ratio of dithiol-terminated polydiorganosiloxane to divinylsulfone (or dimaleimide) should be great than 1 in order to obtained dithiol-terminated chain-extended polydiorganosiloxane. A person skilled in the art knows how to control the number of polydiorganosiloxane segments in the resultant chain-extended polydiorganosiloxane by varying the molar equivalent ratio of dithio-terminated polydiorganosiloxane to divinylsulfone (or dimaleimide). In the third step, the dithiol-terminated chain-extended polydiorganosiloxane can be reacted with a vinylic crosslinking agent having two (meth)acryloyl groups according to Thiol Michael Addition reaction, to obtain a chain-extended polydiorganosiloxane vinylic crosslinker of the invention.

A chain-extended polydiorganosiloxane vinylic crosslinker having one or more linkages of formula (I) in which Y₁ is a divalent radical of formula (V) (e.g., a chain-extended polydiorganosiloxane vinylic crosslinker of formula (VII)) can be prepared in a 2-step reaction scheme (for example, as illustrated in Example 2). In the first step, a diamino-terminated polydiorganosiloxane can be reacted with N-acetylhomocysteine thiolactone to obtain a dithiol-terminated polydiorganosiloxane. In the second step, the dithiol-terminated polydiorganosiloxane can be reacted with a vinylic crosslinking agent having two (meth)acryloyl groups according to Thiol Michael Addition reaction, to obtain a chain-extended polydiorganosiloxane vinylic crosslinker of the invention. It is understood that the molar equivalent ratio of dithiol-terminated polydiorganosiloxane to vinylic crosslinking agent should be less than 1 in order to obtain di-(meth)acryloyl-terminated chain-extended polydiorganosiloxane. A person skilled in the art knows how to control the number of polydiorganosiloxane segments in the resultant (meth)acryloyl-terminated chain-extended polydiorganosiloxane by varying the molar equivalent ratio of dithio-terminated polydiorganosiloxane to vinylic crosslinking agent.

A chain-extended polydiorganosiloxane vinylic crosslinker having one or more linkages of formula (II) (e.g., a chain-extended polydiorganosiloxane vinylic crosslinker of formula (VI)) can be prepared in a 2-step reaction scheme. In the first step, a diamine can be reacted with N-acetylhomocysteine thiolactone to obtain a dithiol. In the second step, the dithiol can be reacted with a di-(meth)acryloyl-terminated polydiorganosiloxane according to Thiol Michael Addition reaction, to obtain a chain-extended polydiorganosiloxane vinylic crosslinker of the invention. It is understood that the molar equivalent ratio of dithiol to di-(meth)acryloyl-terminated polydiorganosiloxane should be less than 1 in order to obtain di-(meth)acryloyl-terminated chain-extended polydiorganosiloxane. A person skilled in the art knows how to control the number of polydiorganosiloxane segments in the resultant (meth)acryloyl-terminated chain-extended polydiorganosiloxane by varying the molar equivalent ratio of dithio to di-(meth)acryloyl-terminated polydiorganosiloxane.

Various N-acylhomocysteine thiolactones can be obtained from commercial sources. Examples of preferred N-acylhomocysteine thiolactones include without limitation N-acetylhomocysteine thiolactone, N-propionylhomocysteine thiolactone, N-butyrylhomocysteine thiolactone, and N-carboxybutyryl homocysteine thilactone (or 4-oxo-4-[(tetrahydro-2-oxo-3-thienyl)amino]-butanoic acid).

Various polydiorganosiloxanes having two terminal amino groups (-NHR') can be obtained from commercial suppliers (e.g., from Gelest, Inc, Shin-Etsu, or Fluorochem). Otherwise, one skilled in the art will know how to prepare such diamino-terminated polydiorganosiloxanes according to procedures known in the art and described in Journal of Polymer Science - Chemistry, 33, 1773 (1995).

Any divinylsulfone compounds can be used in the invention. Examples of preferred divinylsulfone ocmpounds include without limitation divinyl sulfone, bis(vinylsulfonyl) C₁-C₆ alkane, 1,3-bis(vinylsulfonyl)-2-propanol, 1,1-bis(vinylsulfonyl)-1-propanol, 1,5-bis(vinylsulfonyl)-3-pentanol, 1,1-bis(vinylsulfonyl)-3-methoxypropane, 1,5-bis(vinylsulfonyl)-2,4-dimethylbenzene, and 1,4-bis(vinylsulfonyl)-2,3,5,6-tetrafluorobenzene.

Any dimaleimides can be used in the invention. Examples of preferred dimaleimides include without limitation 1,8-bismaleimido-diethyleneglycol, 1,11-bismaleimido-triethyleneglycol, dithio-bis-maleimidoethane, α,ω-bismaleimido C₁-C₆ alkane, 1,2-dihydroxyl-1,2-bismaleimidoethane, 1,4-bismaleimido-2,3-dihydroxybutane, N,N'-(1,3-phenylene)dimaleimide.

Any hydrophilic vinylic crosslinking agents having two (meth)acryloyl groups can be used in the invention. Examples of preferred hydrophilic vinylic crosslinking agents include without limitation diacrylamide (i.e., N-(1-oxo-2-propenyl)-2-propenamide), dimethacrylamide (i.e., N-(1-oxo-2-methyl-2-propenyl)-2-methyl-2-propenamide), N,N-di(meth)acryloyl-N-methylamine, N,N-di(meth)acryloyl-N-ethylamine, N,N'-methylene bis(meth)acrylamide, N,N'-ethylene bis(meth)acrylamide, N,N'-dihydroxyethylene bis(meth)acrylamide, N,N'-propylene bis(meth)acrylamide, N,N'-2-hydroxypropylene bis(meth)acrylamide, N,N'-2,3-dihydroxybutylene bis(meth)acrylamide, 1,3-bis(meth)acrylamidepropane-2-yl dihydrogen phosphate (i.e., N,N'-2-phophonyloxypropylene bis(meth)acrylamide), piperazine diacrylamide (or 1,4-bis(meth)acryloyl piperazine), ethyleneglycol di-(meth)acrylate, diethyleneglycol di-(meth)acrylate, triethyleneglycol di-(meth)acrylate, tetraethyleneglycol di-(meth)acrylate, glycerol di-(meth)acrylate, 1,3-propanediol di-(meth)acrylate, 1,3-butanediol di-(meth)acrylate, 1,4-butanediol di-(meth)acrylate, glycerol 1,3-diglycerolate di-(meth)acrylate, ethylenebis[oxy(2-hydroxypropane-1,3-diyl)] di-(meth)acrylate, bis[2-(meth)acryloxyethyl] phosphate, trimethylolpropane di-(meth)acrylate, and 3,4-bis[(meth)acryloyl]tetrahydrofuan.

Any diamines can be used in the invention. Examples of preferred diamines include without limitation 1,3-diamino-2-propanol, 1,2-diaminoethane-1,2-diol, 1,1-diaminoethane-1,2-diol, 1,4-diamino-2,3-butanediol, ethylenediamine, N,N'-dimethyl-1,3-propanediamine, N,N'-diethyl-1,3-propanediamine, 1,3-propanediamine, 1,4-butanediamine, 1,5-pentanediamine, 2,2-dimethyl-1,3-propanediamine, hexamethylenediamine, and isophoronediamine (3-aminomethyl-3,5,5-trimethylcyclohexylamine).

Any di-(meth)acryloyl-terminated polydiorganosiloxanes can be used in the invention. Examples of preferred di-(meth)acryloyl-terminated polydiorganosiloxanes include without limitation α,ω-bis[3-(meth)acrylamidopropyl]-terminated polydimethylsiloxane, α,ω-bis[3-(meth)acryloxypropyl]-terminated polydimethylsiloxane, α,ω-bis[(meth)acryloxyethoxypropyl]-terminated polydimethylsiloxane, α,ω-bis[3-(meth)acryloxy-2-hydroxypropyloxypropyl]-terminated polydimethylsiloxane, α,ω-bis[3-(meth)acryloxyethoxy-2-hydroxypropyloxypropyl]-terminated polydimethylsiloxane, α,ω-bis[3-(meth)acryloxyethylamino-2-hydroxypropyloxypropyl]-terminated polydimethylsiloxane, α,ω-bis[3-(meth)acrylamidoethoxy-2-hydroxypropyloxypropyl]-terminated polydimethylsiloxane, α,ω-bis[(meth)acrylamidoethylamino-2-hydroxypropyloxypropyl]-terminated polydimethylsiloxane, α,ω-bis[3-(meth)acryloxypropoxy-2-hydroxypropyloxypropyl]-terminated polydimethylsiloxane, α,ω-bis[3-(meth)acryloxypropylamino-2-hydroxypropyloxypropyl]-terminated polydimethylsiloxane, α,ω-bis[3-(meth)acrylamidopropoxy-2-hydroxypropyloxypropyl]-terminated polydimethylsiloxane, α,ω-bis[3-(meth)acrylamidopropylamino-2-hydroxypropyloxypropyl]-terminated polydimethylsiloxane, α,ω-bis[3-(meth)acrylamidoisopropoxy-2-hydroxypropyloxypropyl]-terminated polydimethylsiloxane, α,ω-bis[(meth)acryloxy-2-hydroxypropyloxy-ethoxypropyl]-terminated polydimethylsiloxane, α,ω-bis[(meth)acryloxy-2-hydroxypropyl-N-ethylaminopropyl]-terminated polydimethylsiloxane, α,ω-bis[(meth)acryloxy-2-hydroxypropyl-aminopropyl]-polydimethylsiloxane, α,α-bis[(meth)acryloxy-2-hydroxypropyl-oxycabonylpropyl]-terminated polydimethylsiloxane, α,ω-bis[(meth)acryloxy-2-hydroxypropyl-oxy-pentylcabonyloxyalkyl]-terminated polydimethylsiloxane, and α,ω-bis[(meth)acryloxy-2-hydroxypropyl-oxy(polyethylenoxy)propyl]-terminated polydimethylsiloxane.

In a preferred embodiment, a chain-extended polydiorganosiloxane vinylic crosslinker of the invention is free of unstable bonds (such as, ester bond without a tertiary carbon atom adjacent to the carbonyl group of the ester bond, urea bond, urethane bond, polyethylene glycol segment) in the polymer chain of the chain-extended polydiorganosiloxane vinylic crosslinker between the two terminal (meth)acryloyl groups. It is believed that those bonds are susceptible of cleavage due to hydrolysis, photolysis, poor thermal stability, and/or oxidation. By using such a chain-extended polydiorganosiloxane vinylic crosslinker in a silicone hydrogel lens formulation, silicone hydrogel contact lenses obtained from such a lens formulation can have superior lens stability.

A chain-extended polydiorganosiloxane vinylic crosslinker of the invention can find particular use in preparing a polymer, preferably a silicone hydrogel polymeric material, which is another aspect of the invention. A person skilled in the art knows how to prepare a polymer or a silicone hydrogel polymeric material from a polymerizable composition according to any known polymerization mechanism.

In another aspect, the invention provides a silicone hydrogel contact lens comprising a crosslinked polymeric material comprising: units of a chain-extended polydiorganosiloxane vinylic crosslinker of the invention (as defined above), units of a siloxane-containing vinylic monomer, units of at least one hydrophilic vinylic monomer, wherein the silicone hydrogel contact lens, when being fully hydrated, has an oxygen permeability (Dk) of at least about 70 barrers (preferably at least about 80 barrers, more preferably at least about 90 barrers, even more preferably at least about 100 barrers), a water content of from about 25% to about 70% by weight (preferably from about 30% to about 65% by weight, more preferably from about 35% to about 60% by weight, even more preferably from about 40% to about 55% by weight), an elastic modulus of from about 0.20 MPa to about 1.2 MPa (preferably from about 0.25 MPa to about 1.0 MPa, more preferably from about 0.3 MPa to about 0.9 MPa, even more preferably from about 0.4 MPa to about 0.8 MPa). Preferably, the silicone hydrogel contact lens has a thermal stability as characterized by having an autoclave-induced change $\left|\frac{\overline{{LP}_{19 AC}} - \overline{{LP}_{1 AC}}}{\overline{{LP}_{1 AC}}}\right|$ of about 10% or less (preferably about 8% or less, more preferably about 6% or less, even more preferably about 4% or less) in at least one lens property (LP) selected from the group consisting of elastic modulus, water content, lens diameter, and combinations thereof, wherein L̅P̅_̅{̅1̅A̅C̅}̅ is the averaged value of the lens property after one-autoclave and is obtained by averaging the values of the lens property of 15 soft contact lenses measured after being autoclaved one sole time for 30 minutes at 121°C in a phosphate buffered saline at a pH of 7.2±0.2 and L̅P̅_̅{̅1̅9̅A̅C̅}̅ is the averaged values of the lens property after 19-autoclaves and is obtained by averaging the values of the les properies of 15 soft contact lenses measured after being stored and autoclaved 19 times each for 30 minutes at 121°C in a phosphate buffered saline at a pH of 7.2±0.2.

A person skilled in the art knows well how to measure the oxygen permeability, oxygen transmissibility, water content, elastic modulus, and lens diameter of silicone hydrogel contact lenses. These lens properties have been reported by all manufacturers for their silicone hydrogel contact lens products.

Various embodiments of a chain-extended polydiorganosiloxane vinylic crosslinker of the invention (as defined above) should be incorporated into this aspect of the invention.

Any suitable siloxane-containing vinylic monomers can be used in the invention. A class of preferred siloxane-containing vinylic monomers is those containing a tris(trialkylsiloxy)silyl group or a bis(trialkylsilyloxy)alkylsilyl group. Examples of such preferred silicone-containing vinylic monomers include without limitation 3-acrylamidopropyl-bis(trimethylsiloxy)methylsilane, 3-N-methyl acrylamidopropylbis(trimethylsiloxy)methylsilane, N-[tris(trimethylsiloxy)silylpropyl]-(meth)acrylamide, N-[tris(dimethylpropylsiloxy)-silylpropyl]-(meth)acrylamide, N-[tris(dimethylphenylsiloxy)silylpropyl] (meth)acrylamide, N-[tris(dimethylethylsiloxy)silylpropyl](meth)acrylamide, N-(2-hydroxy-3-(3-(bis(trimethylsilyloxy)methylsilyl)propyloxy)propyl)-2-methyl acrylamide; N-(2-hydroxy-3-(3-(bis(trimethylsilyloxy)methylsilyl)propyloxy)propyl)acrylamide; N,N-bis[2-hydroxy-3-(3-(bis(trimethylsilyloxy)methylsilyl)propyloxy)propyl]-2-methyl acrylamide; N,N-bis[2-hydroxy-3-(3-(bis(trimethylsilyloxy)methylsilyl)propyloxy)propyl]acrylamide; N-(2-hydroxy-3-(3-(tris(trimethylsilyloxy)silyl)propyloxy)propyl)-2-methyl acrylamide; N-(2-hydroxy-3-(3-(tris(trimethylsilyloxy)silyl)propyloxy)propyl)acrylamide; N,N-bis[2-hydroxy-3-(3-(tris(trimethylsilyloxy)silyl)propyloxy)propyl]-2-methyl acrylamide; N,N-bis[2-hydroxy-3-(3-(tris(trimethylsilyloxy)silyl)propyloxy)propyl]acrylamide; N-[2-hydroxy-3-(3-(t-butyldimethylsilyl)propyloxy)propyl]-2-methyl acrylamide; N-[2-hydroxy-3-(3-(t-butyldimethylsilyl)propyloxy)propyl]acrylamide; N,N-bis[2-hydroxy-3-(3-(t-butyldimethylsilyl)propyloxy)propyl]-2-methyl acrylamide; N,N-bis[2-hydroxy-3-(3-(t-butyldimethylsilyl)propyloxy)propyl]acrylamide; 3-methacryloxy propylpentamethyldisiloxane, tris(trimethylsilyloxy)silylpropyl methacrylate (TRIS), (3-methacryloxy-2-hydroxypropyloxy)propylbis(trimethylsiloxy)methylsilane), (3-methacryloxy-2-hydroxypropyloxy)propyltris(trimethylsiloxy)silane, 3-methacryloxyethoxypropyloxy-propyl-bis(trimethylsiloxy)methylsilane, N-2-methacryloxyethyl-O-(methyl-bis-trimethylsiloxy-3-propyl)silyl carbamate, 3-(trimethylsilyl)propylvinyl carbonate, 3-(vinyloxycarbonylthio)propyl-tris(trimethyl-siloxy)silane, 3-[tris(trimethylsiloxy)silyl]propylvinyl carbamate, 3-[tris(trimethylsiloxy)silyl] propyl allyl carbamate, 3-[tris(trimethylsiloxy)silyl]propyl vinyl carbonate, t-butyldimethyl-siloxyethyl vinyl carbonate, trimethylsilylethyl vinyl carbonate, trimethylsilylmethyl vinyl carbonate, and hydrophlized siloxane-containing vinylic monomers disclosed in U.S. Pat. Nos. 9,103,965, 9,475,827, and 9,097,840 which comprise at least one hydrophilic linkage and/or at least one hydrophilic chain.

Another class of preferred siloxane-containing vinylic monomers is polycarbosiloxane vinylic monomers (or carbosiloxane vinylic monomers). Examples of such polycarbosiloxane vinylic monomers or macromers are those described in US Patent Nos. 7915323 and 8420711, in US Patent Applicaton Publication Nos. 2012/244088, 2012/245249, 2015/0309211, and 2015/0309210.

A further class of preferred siloxane-containing vinylic monomers is polydimethylsiloxane-containing vinylic monomers. Examples of such polydimethylsiloxane-containing vinylic monomers are mono-(meth)acryloxy-terminated polydimethylsiloxanes of various molecular weight (e.g., mono-3-methacryloxypropyl terminated, mono-butyl terminated polydimethylsiloxane or mono-(3-methacryloxy-2-hydroxypropyloxy)propyl terminated, mono-butyl terminated polydimethylsiloxane), mono-(meth)acrylamido-terminated polydimethylsiloxanes of various molecular weight, or combinations thereof.

In accordance with the invention, a siloxane-containing vinylic monomer is preferably 3-(meth)acryloxy-2-hydroxypropyloxy)propylbis(trimethylsiloxy)methylsilane, 3-(meth)acryloxyethoxypropyloxypropylbis(trimethylsiloxy)methylsilane, 3-(meth)acrylamidopropyl-bis(trimethylsiloxy)methylsilane, 3-N-methyl (meth)acrylamidopropylbis(trimethylsiloxy) methylsilane, mono-(meth)acryloxy-terminated polydimethylsiloxanes of various molecular weight, mono-(meth)acrylamido-terminated polydimethylsiloxanes of various molecular weight, or a combination thereof.

It is understood that the crosslinked polymeric material of a silicone hydrogel contact lens of the invention can optionally comprise a polydimethylsiloxane vinylic crosslinker so long it is compatible with the hydrophilic polymerizable ocmponents in a lens-forming composition for making the silicone hydrogel contact lens.

Examples of preferred hydrophilic vinylic monomers include without limitation N-vinylpyrrolidone, N,N-dimethyl(meth)acrylamide, (meth)acrylamide, N-2-hydroxylethyl (meth)acrylamide, N,N-bis(hydroxyethyl)(meth)acrylamide, N-3-hydroxypropyl (meth)acrylamide, N-2-hydroxypropyl(meth)acrylamide, N-2,3-dihydroxypropyl (meth)acrylamide, *N*-tris(hydroxymethyl)methyl(meth)acrylamide, 2-hydroxyethyl (meth)acrylate, 3-hydroxypropyl(meth)acrylate, 2-hydroxypropyl(meth)acrylate, glycerol methacrylate (GMA), di(ethylene glycol)(meth)acrylate, tri(ethylene glycol)(meth)acrylate, tetra(ethylene glycol)(meth)acrylate, polyethylene glycol(meth)acrylate having a number-average molecular weight of up to 1500, polyethylene glycol C₁-C₄-alkyl ether (meth)acrylate having a number-average molecular weight of up to 1500, N-vinyl formamide, N-vinyl acetamide, N-vinyl isopropylamide, N-vinyl-N-methyl acetamide, N-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, (meth)acrylic acid, ethylacrylic acid, and combinations thereof. Preferably, the hydrophilic vinylic monomer is a hydrophilic N-vinyl monomer, such as, N-vinylpyrrolidone, N-vinyl-N-methyl acetamide, N-vinyl formamide, N-vinyl acetamide, N-vinyl isopropylamide, or combinations thereof. Even more preferably, the hydrophilic vinylic monomer is N-vinylpyrrolidone, N-vinyl-N-methyl acetamide, or combinations thereof.

In accordance with the invention, the crosslinked polymeric material of a silicone hydrogel contact lens of the invention can further comprise units of a hydrophobic vinylic monomer free of silicone, units of a non-silicone vinylic crosslinker, units of a UV-absorbing vinylic monomer, or a combination thereof.

Examples of preferred hydrophobic vinylic monomers include methylacrylate, ethylacrylate, propylacrylate, isopropylacrylate, cyclohexylacrylate, 2-ethylhexylacrylate, methylmethacrylate, ethylmethacrylate, propylmethacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethyl-thio-carbonyl-aminoethyl-methacrylate, isobornyl methacrylate, trifluoroethyl methacrylate, hexafluoro-isopropyl methacrylate, hexafluorobutyl methacrylate.

Examples of preferred non-silicone crosslinkers include without limitation ethyleneglycol di-(meth)acrylate, diethyleneglycol di-(meth)acrylate, triethyleneglycol di-(meth)acrylate, tetraethyleneglycol di-(meth)acrylate, glycerol di-(meth)acrylate, 1,3-propanediol di-(meth)acrylate, 1,3-butanediol di-(meth)acrylate, 1,4-butanediol di-(meth)acrylate, glycerol 1,3-diglycerolate di-(meth)acrylate, ethylenebis[oxy(2-hydroxypropane-1,3-diyl)]di-(meth)acrylate, bis[2-(meth)acryloxyethyl]phosphate, trimethylolpropane di-(meth)acrylate, and 3,4-bis[(meth)acryloyl]tetrahydrofuan, diacrylamide (i.e., N-(1-oxo-2-propenyl)-2-propenamide), dimethacrylamide (i.e., N-(1-oxo-2-methyl-2-propenyl)-2-methyl-2-propenamide), N,N-di(meth)acryloyl-N-methylamine, N,N-di(meth)acryloyl-N-ethylamine, N,N'-methylene bis(meth)acrylamide, N,N'-ethylene bis(meth)acrylamide, N,N'-dihydroxyethylene bis(meth)acrylamide, N,N'-propylene bis(meth)acrylamide, N,N'-2-hydroxypropylene bis(meth)acrylamide, N,N'-2,3-dihydroxybutylene bis(meth)acrylamide, 1,3-bis(meth)acrylamidepropane-2-yl dihydrogen phosphate (i.e., N,N'-2-phosphonyloxypropylene bis(meth)acrylamide), piperazine diacrylamide (or 1,4-bis(meth)acryloyl piperazine), vinyl methacrylate, allylmethacrylate, allylacrylate, N-allyl-methacrylamide, N-allyl-acrylamide, tetraethyleneglycol divinyl ether, triethyleneglycol divinyl ether, diethyleneglycol divinyl ether, ethyleneglycol divinyl ether, triallyl isocyanurate, triallyl cyanurate, trimethylopropane trimethacrylate, pentaerythritol tetramethacrylate, bisphenol A dimethacrylate, a product of diamine (preferably selected from the group consisting of N,N'-bis(hydroxyethyl)ethylenediamine, N,N'-dimethylethylenediamine, ethylenediamine, N,N'-dimethyl-1,3-propanediamine, N,N'-diethyl-1,3-propanediamine, propane-1,3-diamine, butane-1,4-diamine, pentane-1,5-diamine, hexamethylenediamine, isophorone diamine, and combinations thereof) and epoxy-containing vinylic monomer (prepferrably selected from the group consisting of glycidyl(meth)acrylate, vinyl glycidyl ether, allyl glycidyl ether, and combinations thereof), combinations thereof.

Examples of preferred UV-absorbing vinylic monomers include without limitation: 2-(2-hydroxy-5-vinylphenyl)-2H-benzotriazole, 2-(2-hydroxy-5-acrylyloxyphenyl)-2H-benzotriazole, 2-(2-hydroxy-3-methacrylamido methyl-5-tert octylphenyl) benzotriazole, 2-(2'-hydroxy-5'-methacrylamidophenyl)-5-chlorobenzotriazole, 2-(2'-hydroxy-5'-methacrylamidophenyl)-5-methoxybenzotriazole, 2-(2'-hydroxy-5'-methacryloxypropyl-3'-t-butyl-phenyl)-5-chlorobenzotriazole, 2-(2'-hydroxy-5'-methacryloxypropylphenyl) benzotriazole, 2-hydroxy-5-methoxy-3-(5-(trifluoromethyl)-2H-benzo[d][1,2,3]triazol-2-yl)benzyl methacrylate (WL-1), 2-hydroxy-5-methoxy-3-(5-methoxy-2H-benzo[d][1,2,3]triazol-2-yl)benzyl methacrylate (WL-5), 3-(5-fluoro-2H-benzo[d][1,2,3]triazol-2-yl)-2-hydroxy-5-methoxybenzyl methacrylate (WL-2), 3-(2H-benzo[d][1,2,3]triazol-2-yl)-2-hydroxy-5-methoxybenzyl methacrylate (WL-3), 3-(5-chloro-2H-benzo[d][1,2,3]triazol-2-yl)-2-hydroxy-5-methoxybenzyl methacrylate (WL-4), 2-hydroxy-5-methoxy-3-(5-methyl-2H-benzo[d][1,2,3]triazol-2-yl)benzyl methacrylate (WL-6), 2-hydroxy-5-methyl-3-(5-(trifluoromethyl)-2H-benzo[d][1,2,3]triazol-2-yl)benzyl methacrylate (WL-7), 4-allyl-2-(5-chloro-2H-benzo[d][1,2,3]triazol-2-yl)-6-methoxyphenol (WL-8), 2-{2'-Hydroxy-3'-*tert*-5'[3"-(4"-vinylbenzyloxy)propoxy]phenyl}-5-methoxy-*2H*-benzotriazole, phenol, 2-(5-chloro-2*H*-benzotriazol-2-yl)-6-(1,1-dimethylethyl)-4-ethenyl- (UVAM), 2-[2'-hydroxy-5'-(2-methacryloxyethyl)phenyl)]-2H-benzotriazole (2-Propenoic acid, 2-methyl-, 2-[3-(2*H*-benzotriazol-2-yl)-4-hydroxyphenyl]ethyl ester, Norbloc), 2-{2'-Hydroxy-3'-*tert*-butyl-5'-[3'-methacryloyloxypropoxy]phenyl}-2*H*-benzotriazole, 2-{2'-Hydroxy-3'-*tert*-butyl-5'-[3'-methacryloyloxypropoxy]phenyl}-5-methoxy-2*H*-benzotriazole (UV13), 2-{2'-Hydroxy-3'-*tert*-butyl-5'-[3'-methacryloyloxypropoxy]phenyl}-5-chloro-2*H*-benzotriazole (UV28), 2-[2'-Hydroxy-3'-*tert*-butyl-5'-(3'-acryloyloxypropoxy)phenyl]-5-trifluoromethyl-2*H*-benzotriazole (UV23), 2-(2'-hydroxy-5-methacrylamidophenyl)-5-methoxybenzotriazole (UV6), 2-(3-allyl-2-hydroxy-5-methylphenyl)-2*H*-benzotriazole (UV9), 2-(2-Hydroxy-3-methallyl-5-methylphenyl)-*2H*-benzotriazole (UV12), 2-3'-t-butyl-2'-hydroxy-5'-(3"-dimethylvinylsilylpropoxy)-2'-hydroxy-phenyl)-5-methoxybenzotriazole (UV15), 2-(2'-hydroxy-5'-methacryloylpropyl-3'-tert-butyl-phenyl)-5-methoxy-2*H*-benzotriazole (UV16), 2-(2'-hydroxy-5'-acryloylpropyl-3'-tert-butyl-phenyl)-5-methoxy-2*H*-benzotriazole (UV16A), 2-Methylacrylic acid 3-[3-tert-butyl-5-(5-chlorobenzotriazol-2-yl)-4-hydroxyphenyl]-propyl ester (16-100, CAS#96478-15-8), 2-(3-(tert-butyl)-4-hydroxy-5-(5-methoxy-2H-benzo[d][1,2,3]triazol-2-yl)phenoxy)ethyl methacrylate (16-102); Phenol, 2-(5-chloro-2*H-*benzotriazol-2-yl)-6-methoxy-4-(2-propen-1-yl) (CAS#1260141-20-5); 2-[2-Hydroxy-5-[3-(methacryloyloxy)propyl]-3-*tert*-butylphenyl]-5-chloro-2*H*-benzotriazole; Phenol, 2-(5-ethenyl-2H-benzotriazol-2-yl)-4-methyl-, homopolymer (9CI) (CAS#83063-87-0).

A silicone hydrogel contact lens can be prepared from a lens-forming composition according to a method of the invention which is another aspect of the invention.

In a further aspect, the present invention provides a method for producing silicone hydrogel contact lenses. The method comprises the steps of: preparing a lens-forming composition which is clear at room temperature and optionally but preferably at a temperature of from about 0 to about 4°C, wherein the lens-forming composition comprises (a) from about 5% to about 35% by weight of a chain-extended polydiorganosiloxane vinylic crosslinker of the invention (as defined above), (b) a siloxane-containing vinylic monomer, (c) from about 30% to about 60% by weight of at least one hydrophilic vinylic monomer, (d) at least one free-radical initiator, provided that the above-listed polymerizable components and any additional polymerizable components add up to 100% by weight; introducing the lens-forming compositon into a mold, wherein the mold has a first mold half with a first molding surface defining the anterior surface of a contact lens and a second mold half with a second molding surface defining the posterior surface of the contact lens, wherein said first and second mold halves are configured to receive each other such that a cavity is formed between said first and second molding surfaces; curing thermally or actinically the lens-forming composition in the lens mold to form a silicone hydrogel contact lens, wherein the silicone hydrogel contact lens has an oxygen permeability (Dk) of at least about 70 barrers, a water content of from about 25% to about 70% by weight, and an elastic modulus of from about 0.2 MPa to about 1.2 MPa.

Various embodiments described above of a chain-extended polydiorganosiloxane vinylic crosslinker of the invention (as defined above) should be incorporated into this aspect of the invention.

Various embodiments described above of a siloxane-containing vinylic monomer, a hydrophilic vinylic monomer should be incorporated in this aspect of the invention.

In accordance with the invention, a free-radical initiator can be a thermal initiator or photoinitiator.

Any thermal polymerization initiators can be used in the invention. Suitable thermal polymerization initiators are known to the skilled artisan and comprise, for example peroxides, hydroperoxides, azo-bis(alkyl- or cycloalkylnitriles), persulfates, percarbonates, or mixtures thereof. Examples of preferred thermal polymerization initiators include without limitation benzoyl peroxide, t-butyl peroxide, t-amyl peroxybenzoate, 2,2-bis(tert-butylperoxy)butane, 1,1-bis(tert-butylperoxy)cyclohexane, 2,5-Bis(tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, di-t-butyl-diperoxyphthalate, t-butyl hydroperoxide, t-butyl peracetate, t-butyl peroxybenzoate, t-butylperoxy isopropyl carbonate, acetyl peroxide, lauroyl peroxide, decanoyl peroxide, dicetyl peroxydicarbonate, di(4-t-butylcyclohexyl)peroxy dicarbonate (Perkadox 16S), di(2-ethylhexyl)peroxy dicarbonate, t-butylperoxy pivalate (Lupersol 11); t-butylperoxy-2-ethylhexanoate (Trigonox 21-C50), 2,4- pentanedione peroxide, dicumyl peroxide, peracetic acid, potassium persulfate, sodium persulfate, ammonium persulfate, 2,2'-azobis(4-methoxy-2,4-dimethylvaleronitrile) (VAZO 33), 2,2'-Azobis[2-(2-imidazolin-2-yl)propane]dihydrochloride (VAZO 44), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64 or AIBN), 2,2'-azobis-2-methylbutyronitrile (VAZO 67), 1,1-azobis(1-cyclohexanecarbonitrile) (VAZO 88); 2,2'-azobis(2-cyclopropylpropionitrile), 2,2'-azobis(methylisobutyrate), 4,4'-Azobis(4-cyanovaleric acid), and combinations thereof. Preferably, the thermal initiator is 2,2'-azobis(isobutyronitrile) (AIBN or VAZO 64). The reaction time may vary within wide limits, but is conveniently, for example, from 1 to 24 hours or preferably from 2 to 12 hours. It is advantageous to previously degas the components and solvents used in the polymerization reaction and to carry out said copolymerization reaction under an inert atmosphere, for example under a nitrogen or argon atmosphere.

Suitable photoinitiators are benzoin methyl ether, diethoxyacetophenone, a benzoylphosphine oxide, 1-hydroxycyclohexyl phenyl ketone and Darocur and Irgacur types, preferably Darocur 1173® and Darocur 2959®, Germanium-based Norrish Type I photoinitiators. Examples of benzoylphosphine initiators include 2,4,6-trimethylbenzoyldiphenylophosphine oxide; bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 632 329. The polymerization can then be triggered off by actinic radiation, for example light, in particular UV light of a suitable wavelength. The spectral requirements can be controlled accordingly, if appropriate, by addition of suitable photosensitizers.

Where a vinylic monomer capable of absorbing ultra-violet radiation and high energy violet light (HEVL) is used in the invention, a Germanium-based Norrish Type I photoinitiator and a light source including a light in the region of about 400 to about 550 nm are preferably used to initiate a free-radical polymerization. Any Germanium-based Norrish Type I photoinitiators can be used in this invention, so long as they are capable of initiating a free-radical polymerization under irradiation with a light in the region of about 400 to about 550 nm. Examples of Germanium-based Norrish Type I photoinitiators are acylgermanium compounds described in US 7,605,190

In a preferred embodiment, the lens-forming composition comprises an organic solvent.

Example of suitable solvents includes without limitation, tetrahydrofuran, tripropylene glycol methyl ether, dipropylene glycol methyl ether, ethylene glycol n-butyl ether, ketones (e.g., acetone, methyl ethyl ketone, etc.), diethylene glycol n-butyl ether, diethylene glycol methyl ether, ethylene glycol phenyl ether, propylene glycol methyl ether, propylene glycol methyl ether acetate, dipropylene glycol methyl ether acetate, propylene glycol n-propyl ether, dipropylene glycol n-propyl ether, tripropylene glycol n-butyl ether, propylene glycol n-butyl ether, dipropylene glycol n-butyl ether, tripropylene glycol n-butyl ether, propylene glycol phenyl ether dipropylene glycol dimetyl ether, polyethylene glycols, polypropylene glycols, ethyl acetate, butyl acetate, amyl acetate, methyl lactate, ethyl lactate, i-propyl lactate, methylene chloride, 2-butanol, 1-propanol, 2-propanol, menthol, cyclohexanol, cyclopentanol and exonorborneol, 2-pentanol, 3-pentanol, 2-hexanol, 3-hexanol, 3-methyl-2-butanol, 2-heptanol, 2-octanol, 2-nonanol, 2-decanol, 3-octanol, norborneol, tert-butanol, tert-amyl, alcohol, 2-methyl-2-pentanol, 2,3-dimethyl-2-butanol, 3-methyl-3-pentanol, 1-methyl-cyclohexanol, 2-methyl-2-hexanol, 3,7-dimethyl-3-octanol, 1-chloro-2-methyl-2-propanol, 2-methyl-2-heptanol, 2-methyl-2-octanol, 2-2-methyl-2-nonanol, 2-methyl-2-decanol, 3-methyl-3-hexanol, 3-methyl-3-heptanol, 4-methyl-4-heptanol, 3-methyl-3-octanol, 4-methyl-4-octanol, 3-methyl-3-nonanol, 4-methyl-4-nonanol, 3-methyl-3-octanol, 3-ethyl-3-hexanol, 3-methyl-3-heptanol, 4-ethyl-4-heptanol, 4-propyl-4-heptanol, 4-isopropyl-4-heptanol, 2,4-dimethyl-2-pentanol, 1-methylcyclopentanol, 1-ethylcyclopentanol, 1-ethylcyclopentanol, 3-hydroxy-3-methyl-1-butene, 4-hydroxy-4-methyl-1-cyclopentanol, 2-phenyl-2-propanol, 2-methoxy-2-methyl-2-propanol 2,3,4-trimethyl-3-pentanol, 3,7-dimethyl-3-octanol, 2-phenyl-2-butanol, 2-methyl-1-phenyl-2-propanol and 3-ethyl-3-pentanol, 1-ethoxy-2-propanol, 1-methyl-2-propanol, t-amyl alcohol, isopropanol, 1-methyl-2-pyrrolidone, N,N-dimethylpropionamide, dimethyl formamide, dimethyl acetamide, dimethyl propionamide, N-methyl pyrrolidinone, and mixtures thereof.

In another preferred embodiment, a lens-forming composition is a solution of all the desirable components dissolved in 1,2-propylene glycol, a polyethyleneglycol having a molecular weight of about 400 Daltons or less, or a mixture thereof.

In another preferred embodiment, the lens-forming composition is a solventless liquid mixture and comprises a blending vinylic monomer selected from the group consisting of a C₁-C₁₀ alkyl methacrylate, isobornylmethacrylate, isobornylacrylate, cyclopentylmethacrylate, cyclopentylacrylate, cyclohexylmethacrylate, cyclohexylacrylate, styrene, 2,4,6-trimethylstyrene (TMS), and t-butyl styrene (TBS), and combinations thereof. Preferably, the blending vinylic monomer is methylmethacrylate.

In another preferred embodiment, the total amount of all silicone-containing polymerizable components present in the lens-forming composition is about 65% or less.

In another preferred embodiment, the hydrophilic vinylic monomer is a hydrophilic N-vinyl monomer, preferably is N-vinylpyrrolidone, N-vinyl-N-methyl acetamide, N-vinyl formamide, N-vinyl acetamide, N-vinyl isopropylamide, or combinations thereof, even more preferably is N-vinylpyrrolidone, N-vinyl-N-methyl acetamide, or combinations thereof.

In another preferred embodiment, the lens-forming composition further comprises a non-silicone vinylic crosslinker. Various embodiments described above of a siloxane-containing vinylic monomer, a hydrophilic vinylic monomer should be incorporated in this aspect of the invention. The amount of a non-silicone vinylic crosslinker used is expressed in the weight content with respect to the total polymerizable components and is preferably in the range from about 0.05% to about 2%, and more preferably in the range from about 0.1% to about 1.5%, even more preferably in the range from about 0.15% to about 1.0%.

In accordance with the invention, the lens-forming composition can further comprise other components, such as, a visibility tinting agent (e.g., dyes, pigments, or mixtures thereof), antimicrobial agents (e.g., preferably silver nanoparticles), a bioactive agent, leachable lubricants, leachable tear-stabilizing agents, and mixtures thereof, as known to a person skilled in the art.

Lens molds for making contact lenses are well known to a person skilled in the art and, for example, are employed in cast molding or spin casting. For example, a mold (for cast molding) generally comprises at least two mold sections (or portions) or mold halves, i.e. first and second mold halves. The first mold half defines a first molding (or optical) surface and the second mold half defines a second molding (or optical) surface. The first and second mold halves are configured to receive each other such that a lens forming cavity is formed between the first molding surface and the second molding surface. The molding surface of a mold half is the cavity-forming surface of the mold and in direct contact with lens-forming material.

Methods of manufacturing mold sections for cast-molding a contact lens are generally well known to those of ordinary skill in the art. The process of the present invention is not limited to any particular method of forming a mold. In fact, any method of forming a mold can be used in the present invention. The first and second mold halves can be formed through various techniques, such as injection molding or lathing. Examples of suitable processes for forming the mold halves are disclosed in U.S. Patent Nos. 4,444,711 to Schad; 4,460,534 to Boehm et al.; 5,843,346 to Morrill; and 5,894,002 to Boneberger et al.

Virtually all materials known in the art for making molds can be used to make molds for making contact lenses. For example, polymeric materials, such as polyethylene, polypropylene, polystyrene, PMMA, Topas® COC grade 8007-S10 (clear amorphous copolymer of ethylene and norbornene, from Ticona GmbH of Frankfurt, Germany and Summit, New Jersey), can be used. Other materials that allow UV light transmission could be used, such as quartz glass and sapphire.

In accordance with the invention, the lens-forming formulation (or composition) can be introduced (dispensed) into a cavity formed by a mold according to any known methods.

After the lens-forming composition is dispensed into the mold, it is polymerized to produce a contact lens. Crosslinking may be initiated thermally or actinically.

Opening of the mold so that the molded article can be removed from the mold may take place in a manner known *per se.*

The molded contact lens can be subject to lens extraction to remove unpolymerized polymerizable components. The extraction solvent can be any solvent known to a person skilled in the art. Examples of suitable extraction solvent are those described above. Preferably, water or an aqueous solution is used as extraction solvent. After extraction, lenses can be hydrated in water or an aqueous solution of a wetting agent (e.g., a hydrophilic polymer).

The molded contact lenses can further subject to further processes, such as, for example, surface treatment, packaging in lens packages with a packaging solution which can contain about 0.005% to about 5% by weight of a wetting agent (e.g., a hydrophilic polymer described above known to a person skilled in the art) and/or a viscosity-enhancing agent (e.g., methyl cellulose (MC), ethyl cellulose, hydroxymethylcellulose, hydroxyethyl cellulose (HEC), hydroxypropylcellulose (HPC), hydroxypropylmethyl cellulose (HPMC), or a mixture thereof); sterilization such as autoclave at from 118 to 124°C for at least about 30 minutes.

In a preferred embodiment, the resultant silicone hydrogel contact lens is extracted with water or an aqueous solution.

In another preferred embodiment, the mold is a reusable mold and the lens-forming composition is cured (i.e., polymerized) actinically under a spatial limitation of actinic radiation to form a silicone hydrogel contact lens. Examples of preferred reusable molds are those disclosed in U.S. patent Nos. 6,627,124, 6,800,225, 7,384,590, and 7,387,759. Reusable molds can be made of quartz, glass, sapphire, CaF₂, a cyclic olefin copolymer (such as for example, Topas® COC grade 8007-S10 (clear amorphous copolymer of ethylene and norbornene) from Ticona GmbH of Frankfurt, Germany and Summit, New Jersey, Zeonex® and Zeonor® from Zeon Chemicals LP, Louisville, KY), polymethylmethacrylate (PMMA), polyoxymethylene from DuPont (Delrin), Ultem® (polyetherimide) from G.E. Plastics, PrimoSpire®, and combinations thereof.

The previous disclosure will enable one having ordinary skill in the art to practise the invention. Various modifications, variations, and combinations can be made to the various embodiment described herein. In order to better enable the reader to understand specific embodiments and the advantages thereof, reference to the following examples is suggested. It is intended that the specification and examples be considered as exemplary.

### Example 1

This example illustrates how to prepare a chain-extended polydimethylsiloxane of the invention according to the procedures shown in Scheme 1. To a 500 ml jacketd reactor is added 48.22 g (2.03 molar equivalents) of DL-N-acetylhomocysteine thiolactone (Jintan Shuibei Pharmaceutical Factory) and 48.22 g of dichoromethane. The reactor is maintained at 25°C using a circulator, and protected under nitrogen. After thiolactone solid is fully dissolved, 9.950 g (1.00 molar equivalent) of di-aminopropyl-terminated polydimethylsiloxane (Gelest DMS-A12, Mn=1577.22 by NMR) is added through a syringe. The reaction is monitored by ReactIR, where the peak at 1715 cm⁻¹ corresponding to thiolactone carbonyl stretch decreases over time. After thiolactone ring-opening reaction is complete, 605 µL (0.95 molar equivalents) of divinyl sulfone (Aldrich) and 8.2 mg of 4-dimethylaminopyridine (Alfa Aesar) are added to the reactor. After 4 hours, 9.0 µl of dimethylphenylphosphine (Aldrich) is added, followed by addition of 0.710 mL (0.5 molar equivalent) of diethylene glycol dimethacrylate (Aldrich). The reaction is run overnight. The final reaction solution is purified by repeated dialysis in isopropanol using Spectra/Por® membrane with a molecular weight cutoff of 1K. After dialysis, the solution is concentrated by rotovap to give a white solid (12.59 g). 1H and TOCSY NMR confirm the structure shown in Scheme 1.

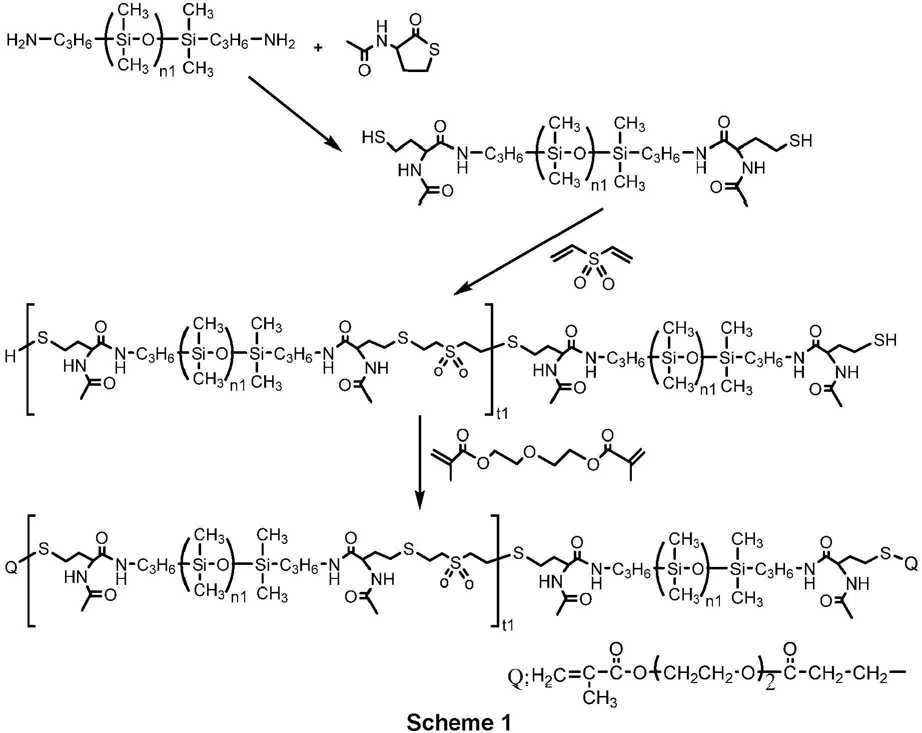

To a 500 ml jacketd reactor are added 48.20 g (2.02 molar equivalents) of DL-N-acetylhomocysteine thiolactone (Jintan Shuibei Pharmaceutical Factory) and 48.20 g of dichoromethane. The reactor is maintained at 25°C using a circulator, and protected under nitrogen. After thiolactone solid is fully dissolved, 9.976 g (1.00 molar equivalent) of di-aminopropyl-terminated polydimethylsiloxane (Gelest DMS-A12, Mn=1577.22 by NMR) is added through a syringe. The reaction is monitored by ReactIR, where the peak at 1715 cm⁻¹ corresponding to thiolactone carbonyl stretch decreases over time. After thiolactone ring-opening reaction is complete, 0.714 g (0.95 molar equivalents) of divinyl sulfone (Aldrich) and 8.2 mg of 4-dimethylaminopyridine (Alfa Aesar) and 0.771g (0.5 molar equivalent) of diethylene glycol dimethacrylate (Aldrich) are added. The reaction is run overnight. The final reaction solution is purified by repeated dialysis in isopropanol using Spectra/Por® membrane with a molecular weight cutoff of 1K. After dialysis, the solution is concentrated by rotovap to give a white solid (12.39 g).

### Example 2

A chain-extended polydimethylsiloxane of the invention is prepared according to the procedures shown in Scheme 2.

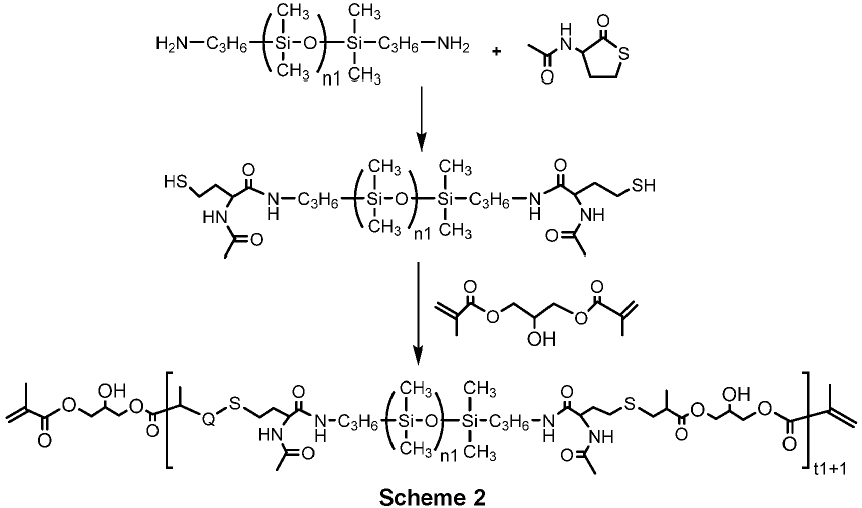

To a 500 ml jacketed reactor are added 8.33 g (2.05 molar equivalents) of DL-N-acetylhomocysteine thiolactone (Alfa Aesar) and 28.75 g of isopropanol. The reactor is maintained at 50°C using a circulator, and protected under nitrogen. After thiolactone solid is fully dissolved, 9.976 g (1.00 molar equivalent) of di-aminopropyl-terminated polydimethylsiloxane (Shin-Etsu X-22-9605, Mn=781.59 by NMR) is added through a syringe. The reaction is monitored by ReactIR, where the peak at 1715 cm⁻¹ corresponding to thiolactone carbonyl stretch decreases over time. After thiolactone ring-opening reaction is complete, the reaction temperature is lowered from 50oC to 25oC, and 64 mg of 4-dimethylaminopyridine (Alfa Aesar) and 6.08 g (1.05 molar equivalent) of glycerol dimethacrylate (TCI B2938) are added. The reaction is run overnight. The final reaction solution is purified by repeated dialysis in isopropanol using Spectra/Por® membrane with a molecular weight cutoff of 1K.

### Example 3

A chain-extended polydimethylsiloxane vinylic crosslinker (CE-PDMS, M.W.-9000 g/mol), which has three polydimethylsiloxane (PDMS) segments linked via diurethane linkages between two PDMS segments, is prepared according to the procedures similar to what is described in Example 2 of US8,529,057.

### Example 4

A low molecular weight chain-extended polydimethylsiloxane vinylic crosslinker (LM CE-PDMS, M.W. -6000 g/mol), which has three polydimethylsiloxane (PDMS) segments linked via diurethane linkages between two PDMS segments, is prepared according to the procedures similar to what is described in Example 2 of US8,529,057.

### Example 5

### Synthesis of the precursor

275.9 g of octamethylcyclotetrasiloxane(M.W. 296.62), 12.0 g of 1,3,5,7-tetramethylcyclotetrasiloxane (M.W. 240.51), 9.7 g of 1,3-bis(3-methacryloxypropyl) tetramethyldisiloxane (M.W. 386.63), and 0.9 g of trifluoromethanesulfonic acid (M.W. 150.08) are weighed into a 500 mL round bottom flask. After the reaction is run at 35°C for 24 h, 170 mL of 0.5% sodium hydrogen carbonate is added. The collected organic portion is further extracted five times with de-ionized water (170 mL per cycle). Anhydrous MgSO₄ is added to the collected organic solution, followed by -350 mL of additional CHCl₃, and the solution is then stirred overnight. After filtration, the solvent is removed via Rotovap, followed by high vacuum. 102 g of final product (the precursor) is obtained. Hydrosilylation Reaction with 3-Allyloxy-1,2-Propanediol to Form PDMS Crosslinker

A small reactor is connected to a heater and air condenser with drying tube. 21 g of toluene, 15 g of above precursor, and 5.03 g of 3-allyloxy-1,2-propanediol are added to the reactor. After the solution temperature is stabilized at 30 °C, 152 µL of Karstedt's catalyst (2 Pt% in xylene) is added. After 2h, the conversion of Si-H of 100% based on IR is achieved. The solution is then transferred to a flask, concentrated using Rotovap, followed by precipitation in actenotrile/water mixture (75/25) three times. After removal of solvent via Rotovap, followed by high vacuum, 12 g of polydiorganosiloxane vinylic crosslinker with glycerol ether substituents (hazy liquid) is obtained.

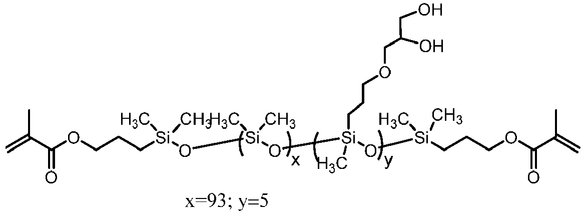

### Example 6

### Synthesis of Glycerol Ether Containing PDMS Macromer (Macromer B)

Macromer B is prepared according to the procedures similar to what described in Example 2, except that the amounts of reactants in the first step for preparing precursor is changed. The obtained polydiorganosiloxane vinylic crosslinker with glycerol ether substituents has a structure formula

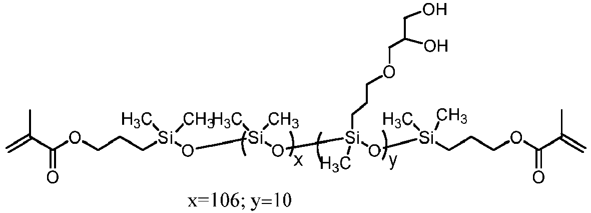

### Example 7

### Compatibility with Hydrophilic Vinylic Monomers

A chain-extended polydimethylsiloxane vinylic crosslinker, prepared in Example 1, is studied for its compatibility with N-vinylpyrrolidone (NVP) at a weight ratio of 1:1 at room temperature. For comparison, vinylic crosslinkers prepared in Examples 3 to 6 are also included in the study. Table 1 shows the results. It shows that a chain-extended polydimethylsiloxane vinylic crosslinker of the invention is most compatible with NVP.

**Table 1**

| **Crosslinker.** | **NVP/Crosslinker (wt. ratio)** | **Compatibility** |
|---|---|---|
| Example 1 | 1:1 | Compatible - homogeneous |
| Example 3 | 1:1 | Not compatible - phase separation |
| Example 4 | 1:1 | Partially compatible - homogeneous, but quite hazy |
| Example 5 | 1:1 | Not compatible - phase separation |
| Example 6 | 1:1 | Compatible - homogeneous |

It is found that, like a polydiorganosiloxane vinylic crosslinker with higher content of hydrophilic substituents (glycerol ether pendant chains), a chain-extended polydimethylosiloxane vinylic crosslinker with hydrophilized linkages between polydimethylsiloxane segments is highly compatible with hydrophilic vinylic monomer, NVP, as shown by its capability to forming a homogeneous mixture at room temperature. These results indicate that the presence of hydrophilized linkages in a chain-extended polydiorganosiloxane vinylic crosslinker of the invention can improve the capability of the crosslinker with hydrophilic vinylic monomers.

## Claims

1. A chain-extended polydiorganosiloxane vinylic crosslinker, comprising:
(1) a polymer chain comprising at least two polydiorganosiloxane segments and one hydrophilized linker, designated "*hp*L", between each pair of polydiorganosiloxane segments, wherein each polydiorganosiloxane comprises at least 5 dimethylsiloxane units in a consecutive sequence, wherein the hydrophilized linker is a divalent radical of formula (I) or (II) 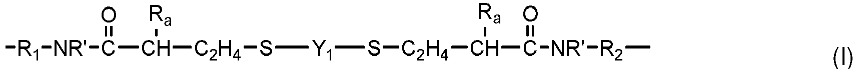 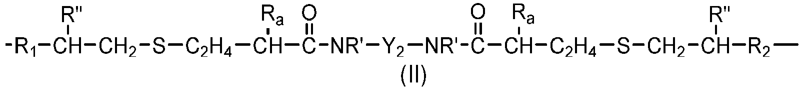 in which
R' is hydrogen or C₁-C₄ alkyl,
R" is hydrogen or methyl,
Rₐ is C₂-C₄ alkanoylamino which optionally has a carboxyl group,
R₁ and R₂ are each linked directly to one silicon atom of one polydiorganosiloxane segment and independent of each other are a C₁-C₆ alkylene divalent radical or a C₁-C₆ alkylene-oxy-C₁-C₆ alkylene divalent radical,
Y₁ is a divalent radical of formula (III), (IV) or (V) 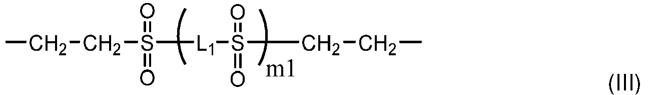 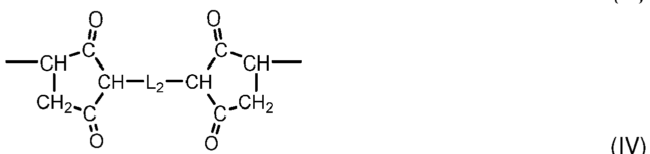 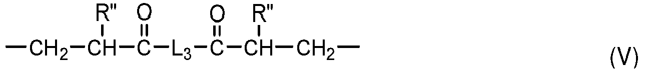 in which
m1 is 0 or 1,
R" is hydrogen or methyl,
L₁ is a C₁-C₆ alkylene divalent radical, a hydroxyl-or methoxy-substituted C₁-C₆ alkylene divalent radical, or a substituted or unsubstituted phenylene divalent radical,
L2 is a C₁-C₆ alkylene divalent radical, a hydroxyl-or methoxy-substituted C₁-C₆ alkylene divalent radical, a dihydroxyl- or dimethoxy-substituted C₂-C₆ alkylene divalent radical, a divalent radical of -C₂H₄-(O-C₂H₄)ₘ₂- in which m2 is an integer of 1 to 6, a divalent radical of -L₄-S-S-L₄- in which L₄ is a C₁-C₆ alkylene divalent radical, a hydroxyl- or methoxy-substituted C₁-C₆ alkylene divalent radical, or a substituted or unsubstituted phenylene divalent radical,
L₃ is a divalent radical of any one of (a) -NR₃- in which R₃ is hydrogen or C₁-C₃ alkyl, (b) 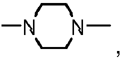 (c) -NR"-L₅-NR"- in which R" is hydrogen or methyl and L₅ is a C₁-C₆ alkylene divalent radical, 2-hydroxylpropylene divalent radical, 2-(phosphonyloxy)propylene divalent radical, 1,2-dihydroxyethylene divalent radical, 2,3-dihydroxybutylene divalent radical, and (d) -O-L₆-O- in which L₆ is a C₁-C₆ alkylene divalent radical, a divalent radical of 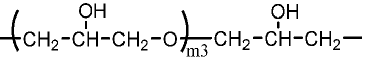 in which m3 is 1 or 2, a divalent radical of 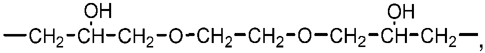 a divalent radical of 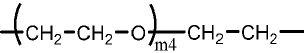 in which m4 is an integer of 1 to 5, a divalent radical of 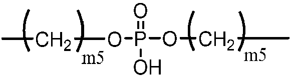 in which m5 is 2 or 3, or a substituted C₃-C₈ alkylene divalent radical having a hydroxyl group or phosphonyloxy group,
Y₂ is a C₁-C₆ alkylene divalent radical, 2-hydroxylpropylene divalent radical, 2-(phosphonyloxy)propylene divalent radical, 1,2-dihydroxyethylene divalent radical, a divalent radical of 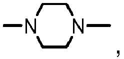 or a divalent radical of 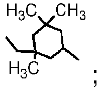
(2) two terminal (meth)acryloyl groups of 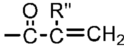 in which R" is hydrogen or methyl,
wherein the chain-extended polydiorganosiloxane vinylic crosslinker has a number-average molecular weight of at least 1500 Daltons.

2. The chain-extended polydiorganosiloxane vinylic crosslinker according to claim 1, wherein the chain-extended polydiorganosiloxane vinylic crosslinker is defined by one of formulae (VI) to (VIII) 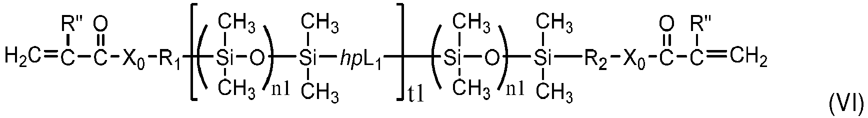 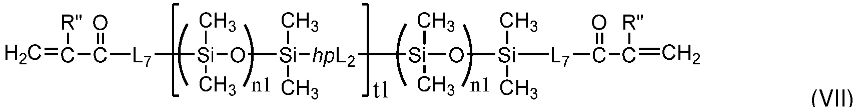 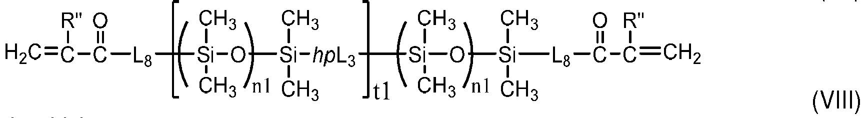 in which:
n1 is an integer of from 5 to 50;
t1 is an integer of from 1 to 15;
X₀ is O or NR' in which R' is hydrogen or C₁-C₄-alkyl;
R" is hydrogen or methyl;
R₁ and R₂ independent of each other are a C₁-C₆ alkylene divalent radical or a C₁-C₆ alkylene-oxy-C₁-C₆ alkylene divalent radical;
*hp*L₁ is a divalent radical of formula (II) in which Y₂ is as defined in claim 1;
*hp*L2 is a divalent radical of formula (I) in which Y₁ is a divalent radical of formula (V) in which L₃ is as defined in claim 1;
*hp*L₃ is a divalent radical of formula (I) in which Y₁ is a divalent radical of formula (III) or (IV) in which L₁ and L₂ are as defined in claim 1;
L₇ is a divalent radical of formula (IXa) or (IXb) 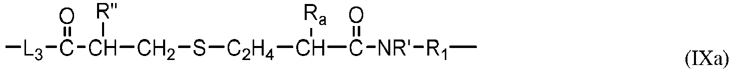 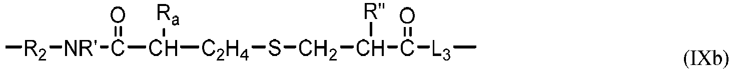
in which R', R", Rₐ, R₁, R₂, and L₃ are as defined in claim 1, each of R₁ and R₂ is linked directly to one silicon atom of one polydiorganosiloxane segment while L₃ is linked directly to one (meth)acryloyl group,
L₈ is a divalent radical of formula (Xa) or (Xb) 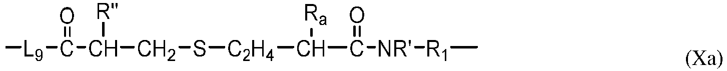 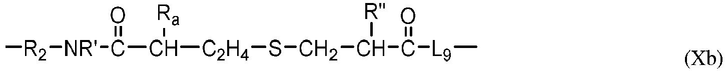
in which R', R", Rₐ, R₁, R₂, and L₃ are as defined in claim 1, each of R₁ and R₂ is linked directly to one silicon atom of one polydiorganosiloxane segment while L₉ is linked directly to one (meth)acryloyl group, and L₉ is a divalent radical of any one of (a) -NR₃- in which R₃ is hydrogen or C₁-C₃ alkyl, (b) 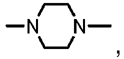 (c) -NR"-L₅-NR"- in which R" is hydrogen or methyl and L₅ is a C₁-C₆ alkylene divalent radical, 2-hydroxylpropylene divalent radical, 2-(phosphonyloxy)propylene divalent radical, 1,2-dihydroxyethylene divalent radical, 2,3-dihydroxybutylene divalent radical, and (d) -O-L₆-O- in which L₆ is a C₁-C₆ alkylene divalent radical, a divalent radical of 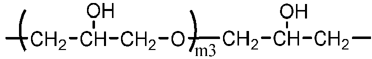 in which m3 is 1 or 2, a divalent radical 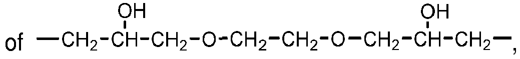 a divalent radical of 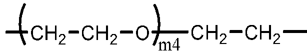 in which m4 is an integer of 1 to 5, a divalent radical of 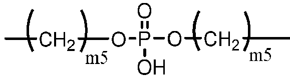 in which m5 is 2 or 3, or a substituted C₃-C₈ alkylene divalent radical having a hydroxyl group or phosphonyloxy group.

3. The chain-extended polydiorganosiloxane vinylic crosslinker according to claim 1 or 2, wherein the chain-extended polydiorganosiloxane vinylic crosslinker is defined by formula (VI).

4. The chain-extended polydiorganosiloxane vinylic crosslinker according to claim 1 or 2, wherein the chain-extended polydiorganosiloxane vinylic crosslinker is defined by formula (VII).

5. The chain-extended polydiorganosiloxane vinylic crosslinker according to claim 1 or 2, wherein the chain-extended polydiorganosiloxane vinylic crosslinker is defined by formula (VIII).

6. The chain-extended polydiorganosiloxane vinylic crosslinker according to any one of claims 1, 2 and 5, wherein Y₁ is a divalent radical of formula (III).

7. The chain-extended polydiorganosiloxane vinylic crosslinker according to any one of claims 1, 2 and 5, wherein Y₁ is a divalent radical of formula (IV).

8. The chain-extended polydiorganosiloxane vinylic crosslinker according to any one of claims 1 to 10, wherein the chain-extended polydiorganosiloxane vinylic crosslinker is free of unstable bonds selected from the group consisting of ester bond with a tertiary carbon atom adjacent to the carbonyl group of the ester bond, urea bond, urethane bond, polyethylene glycol segment, and combinations thereof, in the polymer chain of the chain-extended polydiorganosiloxane vinylic crosslinker between the two terminal (meth)acryloyl groups.

9. A silicone hydrogel contact lens comprising a crosslinked polymeric material which comprises:
units of a chain-extended polydiorganosiloxane vinylic crosslinker according to any one of claims 1 to 8;
units of a siloxane-containing vinylic monomer;
units of at least one hydrophilic vinylic monomer,
wherein the silicone hydrogel contact lens, when being fully hydrated, has an oxygen permeability (Dk) of at least 70 barrers, a water content of from 25% to 70% by weight, and an elastic modulus of from 0.2 MPa to 1.2 MPa.

10. The silicone hydrogel contact lens according to claim 9, wherein the hydrophilic vinylic monomer is N-vinylpyrrolidone, N,N-dimethyl (meth)acrylamide, (meth)acrylamide, hydroxylethyl (meth)acrylamide, hydroxyethyl (meth)acrylate, glycerol methacrylate (GMA), polyethylene glycol (meth)acrylate, polyethylene glycol C₁-C₄-alkyl ether (meth)acrylate having a weight average molecular weight of up to 1500, N-vinyl formamide, N-vinyl acetamide, N-vinyl isopropylamide, N-vinyl-N-methyl acetamide, N-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, (meth)acrylic acid, ethylacrylic acid, or combinations thereof.

11. The silicone hydrogel contact lens according to claim 9 or 10, wherein the crosslinked polymeric material further comprises units of a hydrophobic vinylic monomer free of silicone, units of a non-silicone vinylic crosslinker, units of a UV-absorbing vinylic monomer, or a combination thereof.

12. A method for producing silicone hydrogel contact lenses, comprising the steps of:
preparing a lens-forming composition which is clear at room temperature and/or at a temperature of from 0 to 4°C, "clear" meaning that the lens-forming composition has a light transmissibility of 85% or greater in the range between 400 to 700 nm, wherein the lens-forming composition comprises (a) from 5% to 35% by weight of a chain-extended polydiorganosiloxane vinylic crosslinker of any one of claims 1 to 8, (b) a siloxane-containing vinylic monomer, (c) from 30% to 60% by weight of at least one hydrophilic vinylic monomer, (d) at least one free-radical initiator, provided that the above-listed polymerizable components and any additional polymerizable components add up to 100% by weight;
introducing the lens-forming compositon into a mold, wherein the mold has a first mold half with a first molding surface defining the anterior surface of a contact lens and a second mold half with a second molding surface defining the posterior surface of the contact lens, wherein said first and second mold halves are configured to receive each other such that a cavity is formed between said first and second molding surfaces; and
curing thermally or actinically the lens-forming composition in the lens mold to form a silicone hydrogel contact lens, wherein the silicone hydrogel contact lens has an oxygen permeability (Dk) of at least 70 barrers, a water content of from 25% to 70% by weight, an elastic modulus of from 0.2 MPa to 1.2 MPa,

13. The method according to claim 12, wherein the lens-forming composition is a solventless liquid mixture and comprises a blending vinylic monomer selected from the group consisting of a C₁-C₁₀ alkyl methacrylate, isobornylmethacrylate, isobornylacrylate, cyclopentylmethacrylate, cyclopentylacrylate, cyclohexylmethacrylate, cyclohexylacrylate, styrene, 2,4,6-trimethylstyrene (TMS), and t-butyl styrene (TBS), and combinations thereof, wherein the total amount of all silicone-containing polymerizable components present in the lens-forming composition is 65% or less, wherein the hydrophilic vinylic monomer is a hydrophilic N-vinyl monomer.

14. The method according to claim 12, wherein the lens-forming composition comprises an organic solvent.

15. The method according to any one of claims 12 to 14, wherein the step of curing is carried out thermally.

## Patentansprüche

1. Kettenverlängerter vinylischer Polydiorganosiloxan-Vernetzer, umfassend:
(1) eine Polymerkette mit mindestens zwei Polydiorganosiloxan-Segmenten und einem hydrophilierten Linker (der als "hpL" bezeichnet wird) zwischen jedem Paar von Polydiorganosiloxan-Segmenten, wobei jedes Polydiorganosiloxan mindestens 5 Dimethylsiloxan-Einheiten in einer aufeinanderfolgenden Sequenz umfasst, wobei der hydrophilierte Linker ein zweiwertiger Rest der Formel (I) oder (II) ist: 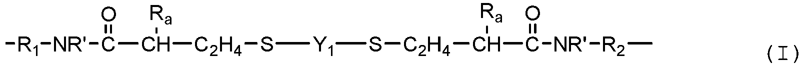 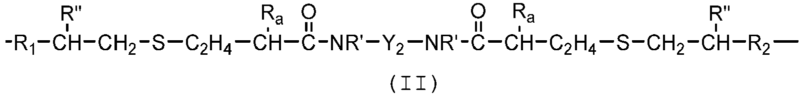 wobei
R' Wasserstoff oder C₁-C₄-Alkyl ist,
R" Wasserstoff oder Methyl ist,
Rₐ C₂-C₄-Alkanoylamino, das gegebenenfalls eine Carboxylgruppe aufweist, ist,
R₁ und R₂ jeweils direkt an ein Siliciumatom eines Polydiorganosiloxan-Segments gebunden sind und unabhängig voneinander ein zweiwertiger C₁-C₆-Alkylenrest oder ein zweiwertiger C₁-C₆-Alkylen-oxy-C₁-C₆-alkylenrest sind,
Y₁ ein zweiwertiger Rest der Formel (III), (IV) oder (V) ist: 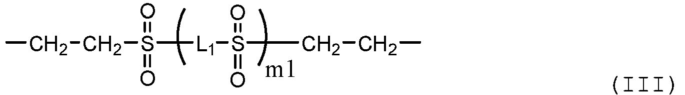 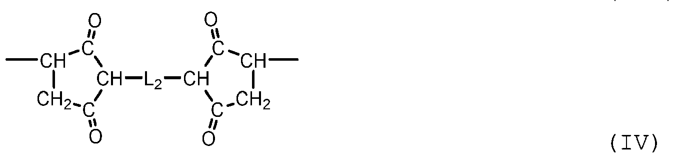 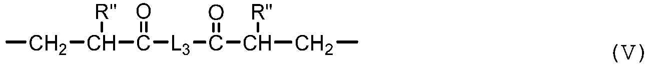 wobei
m1 0 oder 1 ist,
R" Wasserstoff oder Methyl ist,
L₁ ein zweiwertiger C₁-C₆-Alkylenrest, ein hydroxyl- oder methoxysubstituierter zweiwertiger C₁-C₆-Alkylenrest oder ein substituierter oder unsubstituierter zweiwertiger Phenylenrest ist,
L₂ ein zweiwertiger C₁-C₆-Alkylenrest, ein hydroxyl- oder methoxysubstituierter zweiwertiger C₁-C₆-Alkylenrest, ein dihydroxyl- oder dimethoxysubstituierter zweiwertiger C₂-C₆-Alkylenrest, ein zweiwertiger Rest von -C₂H₄-(O-C₂H₄)ₘ₂-, wobei m2 eine ganze Zahl von 1 bis 6 ist, ein zweiwertiger Rest von - L₄-S-S-L₄-, wobei L₄ ein zweiwertiger C₁-C₆-Alkylenrest oder ein hydroxyl- oder methoxysubstituierter zweiwertiger C₁-C₆-Alkylenrest ist, oder ein substituierter oder unsubstituierter zweiwertiger Phenylenrest ist,
L₃ ein zweiwertiger Rest von einem von (a) -NR₃-, wobei R₃ Wasserstoff oder C₁-C₃-Alkyl ist, (b) 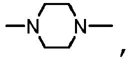 (c) -NR"-L₅-NR"-, wobei R" Wasserstoff oder Methyl ist und L₅ ein zweiwertiger C₁-C₆-Alkylenrest, zweiwertiger 2-Hydroxylpropylenrest, zweiwertiger 2-(Phosphonyloxy)propylenrest, zweiwertiger 1,2-Dihydroxyethylenrest oder zweiwertiger 2,3-Dihydroxybutylenrest ist, und (d) -O-L₆-O-, wobei L₆ ein zweiwertiger C₁-C₆-Alkylenrest, ein zweiwertiger Rest von 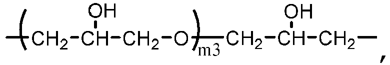 wobei m3 1 oder 2 ist, ein zweiwertiger Rest von 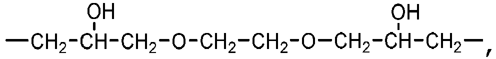 ein zweiwertiger Rest von 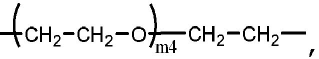 wobei m4 eine ganze Zahl von 1 bis 5 ist, ein zweiwertiger Rest von 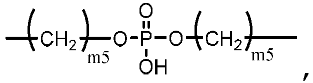 wobei m5 2 oder 3 ist, oder ein substituierter zweiwertiger C₃-C₈-Alkylenrest mit einer Hydroxylgruppe oder Phosphonyloxygruppe ist, ist,
Y₂ ein zweiwertiger C₁-C₆-Alkylenrest, zweiwertiger 2-Hydroxylpropylenrest, zweiwertiger 2-(Phosphonyloxy)-propylenrest, zweiwertiger 1,2-Dihydroxyethylenrest, ein zweiwertiger Rest von 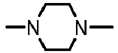 oder ein zweiwertiger Rest von 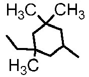 ist;
(2) zwei endständige (Meth)acryloylgruppen von 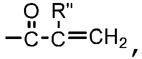 wobei R" Wasserstoff oder Methyl ist,
wobei der kettenverlängerte vinylische Polydiorganosiloxan-Vernetzer ein zahlenmittleres Molekulargewicht von mindestens 1500 Dalton aufweist.

2. Kettenverlängerter vinylischer Polydiorganosiloxan-Vernetzer nach Anspruch 1, wobei der kettenverlängerte vinylische Polydiorganosiloxan-Vernetzer durch eine der Formeln (VI) bis (VIII) definiert ist: 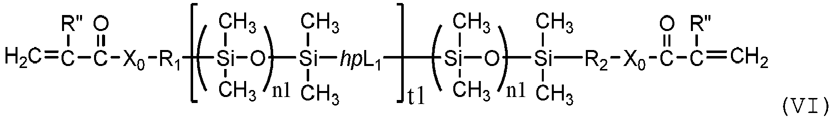 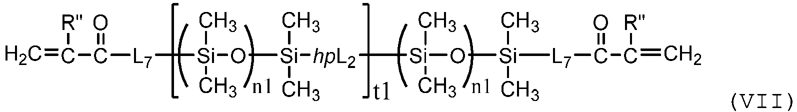 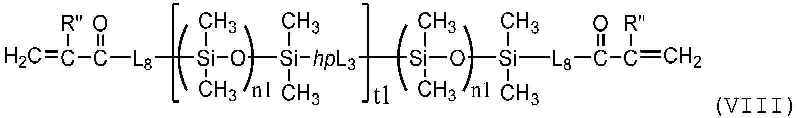 wobei:
n1 eine ganze Zahl von 5 bis 50 ist;
t1 eine ganze Zahl von 1 bis 15 ist;
X₀ O oder NR' ist, wobei R' Wasserstoff oder C₁-C₄-Alkyl ist;
R" Wasserstoff oder Methyl ist;
R₁ und R₂ unabhängig voneinander ein zweiwertiger C₁-C₆-Alkylenrest oder ein zweiwertiger C₁-C₆-Alkylen-oxy-C₁-C₆-alkylenrest sind;
*hp*L₁ ein zweiwertiger Rest der Formel (II) ist, wobei Y₂ wie in Anspruch 1 definiert ist;
*hp*L₂ ein zweiwertiger Rest der Formel (I) ist, wobei Y₁ ein zweiwertiger Rest der Formel (V) ist, wobei L₃ wie in Anspruch 1 definiert ist;
*hp*L₃ ein zweiwertiger Rest der Formel (I) ist, wobei Y₁ ein zweiwertiger Rest der Formel (III) oder (IV) ist, wobei L₁ und L₂ wie in Anspruch 1 definiert sind;
L₇ ein zweiwertiger Rest der Formel (IXa) oder (IXb) ist: 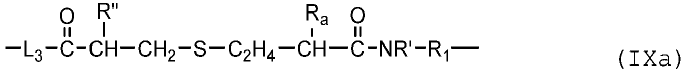 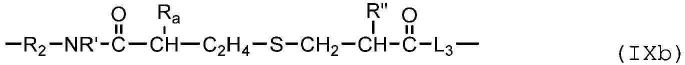
wobei R', R", Rₐ, R₁, R₂ und L₃ wie in Anspruch 1 definiert sind, R₁ und R₂ jeweils direkt an ein Siliciumatom eines Polydiorganosiloxan-Segments gebunden ist, während L₃ direkt an eine (Meth)acryloylgruppe gebunden ist,
L₈ ein zweiwertiger Rest der Formel (Xa) oder (Xb) ist: 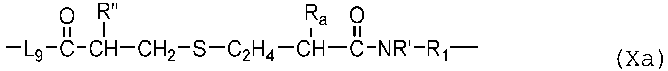 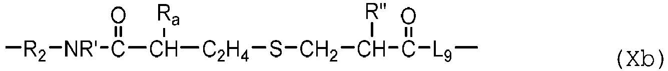
wobei R', R", Rₐ, R₁, R₂ und L₃ wie in Anspruch 1 definiert sind, R₁ und R₂ jeweils direkt an ein Siliciumatom eines Polydiorganosiloxan-Segments gebunden ist, während L₉ direkt an eine (Meth)acryloylgruppe gebunden ist, und L₉ ein zweiwertiger Rest von einem von (a) -NR₃-, wobei R₃ Wasserstoff oder C₁-C₃-Alkyl ist, (b) 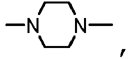 (c) - NR"-L₅-NR"-, wobei R" Wasserstoff oder Methyl ist und L₅ ein zweiwertiger C₁-C₆-Alkylenrest, zweiwertiger 2-Hydroxylpropylenrest, zweiwertiger 2-(Phosphonyloxy)propylenrest, zweiwertiger 1,2-Dihydroxyethylenrest oder zweiwertiger 2,3-Dihydroxybutylenrest ist, und (d) -O-L₆-O-, wobei L₆ ein zweiwertiger C₁-C₆-Alkylenrest, ein zweiwertiger Rest von 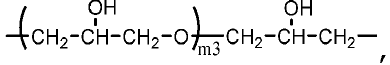 wobei m3 1 oder 2 ist, ein zweiwertiger Rest von 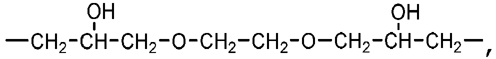 ein zweiwertiger Rest von 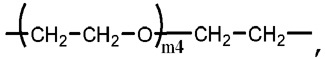 wobei m4 eine ganze Zahl von 1 bis 5 ist, ein zweiwertiger Rest von 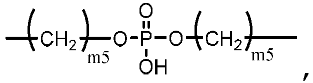 wobei m5 2 oder 3 ist, oder ein substituierter zweiwertiger C₃-C₈-Alkylenrest mit einer Hydroxylgruppe oder Phosphonyloxygruppe ist, ist.

3. Kettenverlängerter vinylischer Polydiorganosiloxan-Vernetzer nach Anspruch 1 oder 2, wobei der kettenverlängerte vinylische Polydiorganosiloxan-Vernetzer durch Formel (VI) definiert ist.

4. Kettenverlängerter vinylischer Polydiorganosiloxan-Vernetzer nach Anspruch 1 oder 2, wobei der kettenverlängerte vinylische Polydiorganosiloxan-Vernetzer durch Formel (VII) definiert ist.

5. Kettenverlängerter vinylischer Polydiorganosiloxan-Vernetzer nach Anspruch 1 oder 2, wobei der kettenverlängerte vinylische Polydiorganosiloxan-Vernetzer durch Formel (VIII) definiert ist.

6. Kettenverlängerter vinylischer Polydiorganosiloxan-Vernetzer nach einem der Ansprüche 1, 2 und 5, wobei Y₁ ein zweiwertiger Rest der Formel (III) ist.

7. Kettenverlängerter vinylischer Polydiorganosiloxan-Vernetzer nach einem der Ansprüche 1, 2 und 5, wobei Y₁ ein zweiwertiger Rest der Formel (IV) ist.

8. Kettenverlängerter vinylischer Polydiorganosiloxan-Vernetzer nach einem der Ansprüche 1 bis 10, wobei der kettenverlängerte vinylische Polydiorganosiloxan-Vernetzer frei von instabilen Bindungen aus der Gruppe bestehend aus Esterbindung mit einem tertiären Kohlenstoffatom in Nachbarschaft zur Carbonylgruppe der Esterbindung, Harnstoffbindung, Urethanbindungen, Polyethylenglykol-Segment und Kombinationen davon in der Polymerkette des kettenverlängerten vinylischen Polydiorganosiloxan-Vernetzers zwischen den beiden endständigen (Meth)acryloylgruppen ist.

9. Silikonhydrogel-Kontaktlinse, umfassend ein vernetztes polymeres Material, das Folgendes umfasst:
Einheiten eines kettenverlängerten vinylischen Polydiorganosiloxan-Vernetzers nach einem der Ansprüche 1 bis 8;
Einheiten eines siloxanhaltigen vinylischen Monomers;
Einheiten mindestens eines hydrophilen vinylischen Monomers;
wobei die Silikonhydrogel-Kontaktlinse in vollständig hydratisiertem Zustand eine Sauerstoffdurchlässigkeit (Dk) von mindestens 70 Barrer, einen Wassergehalt von 25 bis 70 Gew.-% und einen Elastizitätsmodul von 0,2 MPa bis 1,2 MPa aufweist.

10. Silikonhydrogel-Kontaktlinse nach Anspruch 9, wobei das hydrophile vinylische Monomer N-Vinylpyrrolidon, N,N-Dimethyl(meth)acrylamid, (Meth)acrylamid, Hydroxylethyl(meth)acrylamid, Hydroxyethyl(meth)acrylat, Glycerinmethacrylat (GMA), Polyethylenglykol(meth)acrylat, Polyethylenglykol-C₁-C₄-alkylether(meth)acrylat mit einem gewichtsmittleren Molekulargewicht von bis zu 1500, N-Vinylformamid, N-Vinylacetamid, N-Vinylisopropylamid, N-Vinyl-N-methylacetamid, N-Methyl-3-methylen-2-pyrrolidon, 1-Ethyl-3-methylen-2-pyrrolidon, 1-Methyl-5-methylen-2-pyrrolidon, 1-Ethyl-5-methylen-2-pyrrolidon, 5-Methyl-3-methylen-2-pyrrolidon, 5-Ethyl-3-methylen-2-pyrrolidon, (Meth)acrylsäure, Ethylacrylsäure oder Kombinationen davon ist.

11. Silikonhydrogel-Kontaktlinse nach Anspruch 9 oder 10, wobei das vernetzte polymere Material ferner Einheiten eines silikonfreien hydrophoben vinylischen Monomers, Einheiten eines vinylischen Nichtsilikon-Vernetzers, Einheiten eines UV-absorbierenden vinylischen Monomers oder eine Kombination davon umfasst.

12. Verfahren zur Herstellung von Silikonhydrogel-Kontaktlinsen, das folgende Schritte umfasst:
Herstellen einer linsenbildenden Formulierung, die bei Raumtemperatur und/oder bei einer Temperatur von 0 bis 4 °C klar ist, wobei "klar" bedeutet, dass die linsenbildende Zusammensetzung eine Lichtdurchlässigkeit 85 % oder mehr im Bereich zwischen 400 und 700 nm aufweist, wobei die linsenbildende Zusammensetzung (a) 5 bis 35 Gew.-% eines kettenverlängerten vinylischen Polydiorganosiloxan-Vernetzers nach einem der Ansprüche 1 bis 8, (b) ein siloxanhaltiges vinylisches Monomer, (c) 30 bis 60 Gew.-% mindestens eines hydrophilen vinylischen Monomers, (d) mindestens einen Radikalinitiator umfasst, mit der Maßgabe, dass sich die oben aufgeführten polymerisierbaren Komponenten und jegliche zusätzlichen polymerisierbaren Komponenten zu 100 Gew.-% summieren;
Eintragen der linsenbildenden Zusammensetzung in eine Form, wobei die Form eine erste Formhälfte mit einer ersten Formungsoberfläche, die die Vorderseite einer Kontaktlinse definiert, und eine zweite Formhälfte mit einer zweiten Formungsoberfläche, die die Hinterfläche der Kontaktlinse definiert, aufweist, wobei die erste Formhälfte und die zweite Formhälfte konfiguriert sind, um einander so aufzunehmen, dass sich zwischen der ersten Formungsoberfläche und der zweiten Formungsoberfläche ein Hohlraum ergibt; und
thermisches oder aktinisches Härten der linsenbildenden Formulierung in der Linsenform zur Bildung einer Silikonhydrogel-Kontaktlinse, wobei die Silikonhydrogel-Kontaktlinse eine Sauerstoffdurchlässigkeit (Dk) von mindestens 70 Barrer, einen Wassergehalt von 25 bis 70 Gew.-% und einen Elastizitätsmodul von 0,2 MPa bis 1,2 MPa aufweist.

13. Verfahren nach Anspruch 12, wobei die linsenbildende Zusammensetzung eine lösungsmittelfreie flüssige Mischung ist und ein vinylisches Mischmonomer umfasst, das aus der Gruppe bestehend aus C₁-C₁₀-Alkylmethacrylat, Isobornylmethacrylat, Isobornylacrylat, Cyclopentylmethacrylat, Cyclopentylacrylat, Cyclohexylmethacrylat, Cyclohexylacrylat, Styrol, 2,4,6-Trimethylstyrol (TMS) und t-Butylstyrol (TBS) und Kombinationen davon ausgewählt ist, wobei die Gesamtmenge aller silikonhaltigen polymerisierbaren Komponenten in der linsenbildenden Zusammensetzung 65 % oder weniger beträgt, wobei das hydrophile vinylische Monomer ein hydrophiles N-Vinylmonomer ist.

14. Verfahren nach Anspruch 12, wobei die linsenbildende Zusammensetzung ein organisches Lösungsmittel umfasst.

15. Verfahren nach einem der Ansprüche 12 bis 14, wobei der Schritt des Härtens thermisch durchgeführt wird.

## Revendications

1. Agent de réticulation vinylique de type polydiorganosiloxane à chaîne étendue, comprenant :
(1) une chaîne polymère comprenant au moins deux segments de type polydiorganosiloxane et un lieur hydrophilisé, désigné « *hp*L », entre chaque paire de segments de type polydiorganosiloxane, chaque polydiorganosiloxane comprenant au moins 5 motifs diméthylsiloxane dans une séquence consécutive, le lieur hydrophilisé étant un radical divalent de formule (I) ou (II) 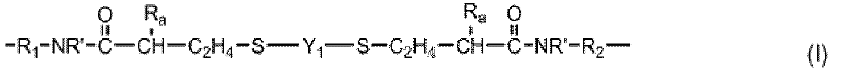 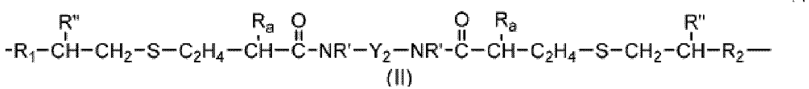 dans lesquelles
R' est hydrogène ou C₁-C₄ alkyle,
R" est hydrogène ou méthyle,
Rₐ est C₂-C₄ alcanoylamino qui possède éventuellement un groupe carboxyle,
R₁ et R₂ sont chacun liés directement à un atome de silicium d'un segment de type polydiorganosiloxane et sont indépendamment l'un de l'autre un radical divalent C₁-C₆ alkylène ou un radical divalent C₁-C₆ alkylèneoxy-C₁-C₆ alkylène,
Y₁ est un radical divalent de formule (III) ou (V) 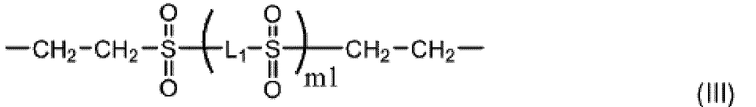 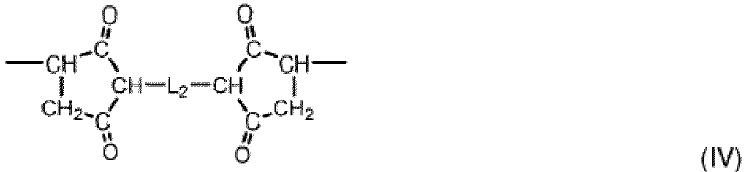 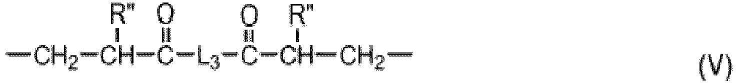 dans lesquelles
m1 est 0 ou 1,
R" est hydrogène ou méthyle,
L₁ est un radical divalent C₁-C₆ alkylène, un radical divalent C₁-C₆ alkylène substitué par hydroxyle ou par méthoxy, ou un radical divalent phénylène substitué ou non substitué, L₂ est un radical divalent C₁-C₆ alkylène, un radical divalent C₁-C₆ alkylène substitué par hydroxyle ou par méthoxy, un radical divalent C₂-C₆ alkylène substitué par dihydroxyle ou par diméthoxy, un radical divalent de -C₂H₄-(OC₂H₄)ₘ₂- dans lequel m2 est un entier de 1 à 6, un radical divalent de -L₄-S-S-L₄- dans lequel L₄ est un radical divalent C₁-C₆ alkylène, un radical divalent C₁-C₆ alkylène substitué par hydroxyle ou par méthoxy, ou un radical divalent phénylène substitué ou non substitué, L₃ est un radical divalent de l'un quelconque parmi (a) -NR₃- dans lequel R₃ est hydrogène ou C₁-C₃ alkyle, (b) 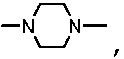 (c) -NR"-L₅-NR"- dans lequel R" est hydrogène ou méthyle et L₅ est un radical divalent C₁-C₆ alkylène, un radical divalent 2-hydroxylpropylène, un radical divalent 2-(phosphonyloxy)propylène, un radical divalent 1,2-dihydroxyéthylène, un radical divalent 2,3-dihydroxybutylène, et (d) -O-L₆-O-dans lequel L₆ est un radical divalent C₁-C₆ alkylène, un radical divalent de 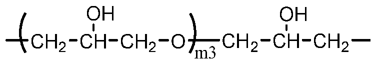 dans lequel m3 est 1 ou 2, un radical divalent de 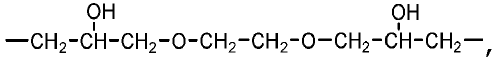 un radical divalent de 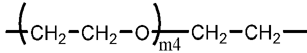 dans lequel m4 est un entier de 1 à 5, un radical divalent de 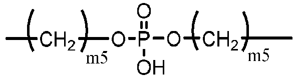 dans lequel m5 est 2 ou 3, ou un radical divalent C₃-C₈ alkylène substitué possédant un groupe hydroxyle ou un groupe phosphonyloxy,
Y₂ est un radical divalent C₁-C₆ alkylène, un radical divalent 2-hydroxylpropylène, un radical divalent 2-(phosphonyloxy)propylène, un radical divalent 1,2-dihydroxyéthylène, un radical divalent de 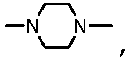 ou un radical divalent de 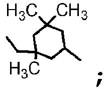
(2) deux groupes terminaux (cf. later in the text) (méth)acryloyle de 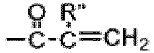 dans lesquels R" est hydrogène ou méthyle, l'agent de réticulation vinylique de type polydiorganosiloxane à chaîne étendue possédant un poids moléculaire moyen en nombre d'au moins 1 500 daltons.

2. Agent de réticulation vinylique de type polydiorganosiloxane à chaîne étendue selon la revendication 1, l'agent de réticulation vinylique de type polydiorganosiloxane à chaîne étendue étant défini par l'une des formules (VI) à (VIII) 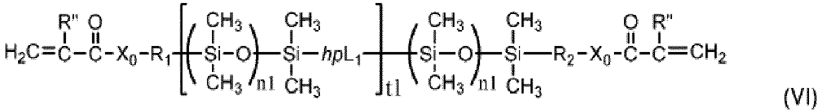 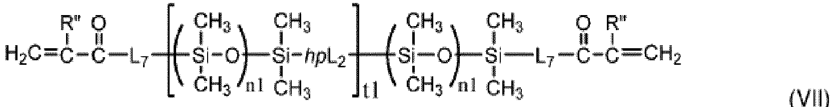 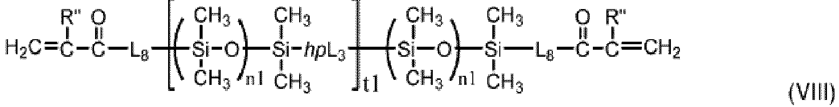 dans lesquelles :
n1 est un entier allant de 5 à 50 ;
t1 est un entier allant de 1 à 15 ;
X₀ est O ou NR' dans lequel R' est hydrogène ou C₁-C₄-alkyle ;
R" est hydrogène ou méthyle ;
R₁ et R₂ sont indépendamment l'un de l'autre un radical divalent C₁-C₆ alkylène ou un radical divalent C₁-C₆ alkylène-oxy-C₁-C₆ alkylène ; *hp*L₁ est un radical divalent de formule (II) dans laquelle Y₂ est tel que défini dans la revendication 1 ;
*hp*L₂ est un radical divalent de formule (I) dans laquelle Y₁ est un radical divalent de formule (V) dans laquelle L₃ est tel que défini dans la revendication 1 ;
*hp*L₃ est un radical divalent de formule (I) dans laquelle Y₁ est un radical divalent de formule (III) ou (IV) dans lesquelles L₁ et L₂ sont tels que définis dans la revendication 1 ;
L₇ est un radical divalent de formule (IXa) ou (IXb) 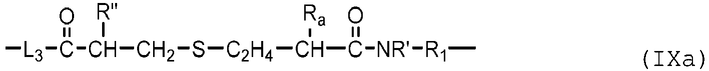 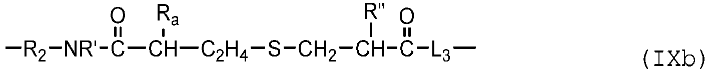
dans lesquelles R' , R", Rₐ, R₁, R₂, et L₃ sont tels que définis dans la revendication 1, chacun parmi R₁ et R₂ étant lié directement à un atome de silicium d'un segment de type polydiorganosiloxane tandis que L₃ est lié directement à un groupe (méth)acryloyle,
L₈ est un radical divalent de formule (Xa) ou (Xb) 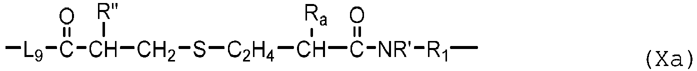 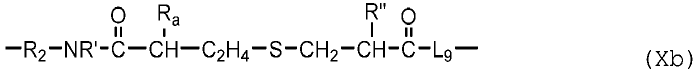
dans lesquelles R' , R", Rₐ, R₁, R₂, et L₃ sont tels que définis dans la revendication 1, chacun parmi R₁ et R₂ étant lié directement à un atome de silicium d'un segment de type polydiorganosiloxane tandis que L₉ est lié directement à un groupe (méth)acryloyle, et L₉ est un radical divalent de l'un quelconque parmi (a) -NR₃- dans lequel R₃ est hydrogène ou C₁-C₃ alkyle, (b) 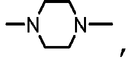 (c) -NR"-L₅-NR"- dans lequel R" est hydrogène ou méthyle et L₅ est un radical divalent C₁-C₆ alkylène, un radical divalent 2-hydroxylpropylène, un radical divalent 2-(phosphonyloxy)propylène, un radical divalent 1,2-dihydroxyéthylène, un radical divalent 2,3-dihydroxybutylène, et (d) -O-L₆-O-dans lequel L₆ est un radical divalent C₁-C₆ alkylène, un radical divalent de 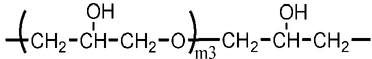 dans lequel m3 est 1 ou 2, un radical divalent de 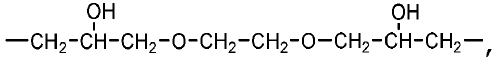 un radical divalent de 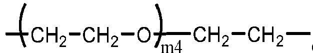 dans lequel m4 est un entier de 1 à 5, un radical divalent de 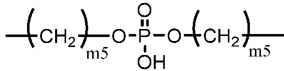 dans lequel m5 est 2 ou 3, ou un radical divalent C₃-C₈ alkylène substitué possédant un groupe hydroxyle ou un groupe phosphonyloxy.

3. Agent de réticulation vinylique de type polydiorganosiloxane à chaîne étendue selon la revendication 1 ou 2, l'agent de réticulation vinylique de type polydiorganosiloxane à chaîne étendue étant défini par la formule (VI).

4. Agent de réticulation vinylique de type polydiorganosiloxane à chaîne étendue selon la revendication 1 ou 2, l'agent de réticulation vinylique de type polydiorganosiloxane à chaîne étendue étant défini par la formule (VII).

5. Agent de réticulation vinylique de type polydiorganosiloxane à chaîne étendue selon la revendication 1 ou 2, l'agent de réticulation vinylique de type polydiorganosiloxane à chaîne étendue étant défini par la formule (VIII).

6. Agent de réticulation vinylique de type polydiorganosiloxane à chaîne étendue selon l'une quelconque des revendications 1, 2 et 5, Y₁ étant un radical divalent de formule (III).

7. Agent de réticulation vinylique de type polydiorganosiloxane à chaîne étendue selon l'une quelconque des revendications 1, 2 et 5, Y₁ étant un radical divalent de formule (IV).

8. Agent de réticulation vinylique de type polydiorganosiloxane à chaîne étendue selon l'une quelconque des revendications 1 à 10, l'agent de réticulation vinylique de type polydiorganosiloxane à chaîne étendue étant exempt de liaisons instables choisies dans le groupe constitué par une liaison ester dotée d'un atome de carbone tertiaire adjacent au groupe carbonyle de la liaison ester, une liaison urée, une liaison uréthane, un segment de type polyéthylèneglycol, et des combinaisons correspondantes, dans la chaîne de polymère de l'agent de réticulation vinylique de type polydiorganosiloxane à chaîne étendue entre les deux groupes terminaux (méth)acryloyle.

9. Lentille de contact en hydrogel de silicone comprenant un matériau polymérique réticulé qui comprend :
des motifs d'un agent de réticulation vinylique de type polydiorganosiloxane à chaîne étendue selon l'une quelconque des revendications 1 à 8 ;
des motifs d'un monomère vinylique contenant un siloxane ;
des motifs d'au moins un monomère vinylique hydrophile,
la lentille de contact en hydrogel de silicone, lorsqu'elle est complètement hydratée, possédant une perméabilité à l'oxygène (Dk) d'au moins 70 barrers, une teneur en eau allant de 25 % à 70 % en poids, et un module d'élasticité allant de 0,2 MPa à 1,2 MPa.

10. Lentille de contact en hydrogel de silicone selon la revendication 9, le monomère vinylique hydrophile étant la N-vinylpyrrolidone, le N,N-diméthyl-(méth)acrylamide, le (méth)acrylamide, l'hydroxyléthyl-(méth)acrylamide, le (méth)acrylate d'hydroxyéthyle, le méthacrylate de glycérol (GMA), le (méth)acrylate de polyéthylèneglycol, le (méth)acrylate de polyéthylèneglycol C₁-C₄-alkyl-éther possédant un poids moléculaire moyen en poids allant jusqu'à 1 500, le N-vinylformamide, le N-vinylacétamide, le N-vinylisopropylamide, le N-vinyl-N-méthylacétamide, la N-méthyl-3-méthylène-2-pyrrolidone, la 1-éthyl-3-méthylène-2-pyrrolidone, la 1-méthyl-5-méthylène-2-pyrrolidone, la 1-éthyl-5-méthylène-2-pyrrolidone, la 5-méthyl-3-méthylène-2-pyrrolidone, la 5-éthyl-3-méthylène-2-pyrrolidone, l'acide (méth)acrylique, l'acide éthylacrylique, ou des combinaisons correspondantes.

11. Lentille de contact en hydrogel de silicone selon la revendication 9 ou 10, le matériau polymérique réticulé comprenant en outre des motifs d'un monomère vinylique hydrophobe exempt de silicone, des motifs d'un agent de réticulation vinylique non de silicone, des motifs d'un monomère vinylique absorbant les UV, ou une combinaison correspondante.

12. Procédé pour la production de lentilles de contact en hydrogel de silicone, comprenant les étapes de :
préparation d'une composition de mise en forme de lentille qui est transparente à température ambiante et/ou à une température allant de 0 à 4 °C, « transparente » signifiant que la composition de mise en forme de lentille possède une transmissibilité de lumière de 85 % ou plus dans la plage comprise entre 400 et 700 nm, la composition de la mise en forme de lentille comprenant (a) de 5 % à 35 % en poids d'un agent de réticulation vinylique de type polydiorganosiloxane à chaîne étendue selon l'une quelconque des revendications 1 à 8, (b) un monomère vinylique contenant un siloxane, (c) de 30 % à 60 % en poids d'au moins un monomère vinylique hydrophile, (d) au moins un initiateur de radicaux libres, étant entendu que les composants polymérisables listés ci-dessus et de quelconques composants polymérisables supplémentaires s'additionnent jusqu'à 100 % en poids ;
introduction de la composition de mise en forme de lentille dans un moule, le moule possédant une première moitié de moule dotée d'une première surface de moulage définissant la surface antérieure d'une lentille de contact et une deuxième moitié de moule dotée d'une deuxième surface de moulage définissant la surface postérieure de la lentille de contact, lesdites première et deuxième moitiés de moule étant conçues pour se recevoir mutuellement de sorte qu'une cavité est formée entre lesdites première et deuxième surfaces de moulage ; et
durcissement de manière thermique ou actinique de la composition de mise en forme de lentille dans le moule de lentille pour former une lentille de contact en hydrogel de silicone, la lentille de contact en hydrogel de silicone possédant une perméabilité à l'oxygène (Dk) d'au moins 70 barrers, une teneur en eau allant de 25 % à 70 % en poids, un module d'élasticité allant de 0,2 MPa à 1,2 MPa.

13. Procédé selon la revendication 12, la composition de mise en forme de lentille étant un mélange liquide sans solvant et comprenant un monomère vinylique d'assemblage choisi dans le groupe constitué par un méthacrylate de C₁-C₁₀ alkyle, le méthacrylate d'isobornyle, l'acrylate d'isobornyle, le méthacrylate de cyclopentyle, l'acrylate de cyclopentyle, le méthacrylate de cyclohexyle, l'acrylate de cyclohexyle, le styrène, le 2,4,6-triméthylstyrène (TMS), et le t-butylstyrène (TBS), et des combinaisons correspondantes, la quantité totale de tous les composants polymérisables contenant un silicone présents dans la composition de mise en forme de lentille étant de 65 % ou moins, le monomère vinylique hydrophile étant un monomère de type N-vinyle hydrophile.

14. Procédé selon la revendication 12, la composition de mise en forme de lentille comprenant un solvant organique.

15. Procédé selon l'une quelconque des revendications 12 à 14, l'étape de durcissement étant mise en œuvre thermiquement.
